(19) **Europäisches Patentamt** | **European Patent Office** | **Office européen des brevets**

(11) **EP 4 078 116 B1**

(12) **FASCICULE DE BREVET EUROPEEN**

(45) Date de publication et mention de la délivrance du brevet:
**26.02.2025 Bulletin 2025/09**

(21) Numéro de dépôt: **20845683.0**

(22) Date de dépôt: **16.12.2020**

(51) Classification Internationale des Brevets (IPC):
*G01J 5/02* (2022.01)   *G01J 5/08* (2022.01)
*G01J 5/20* (2006.01)   *G01J 5/22* (2006.01)

(52) Classification Coopérative des Brevets (CPC):
**G01J 5/20; G01J 5/024; G01J 5/0853; G01J 5/22**

(86) Numéro de dépôt international:
**PCT/FR2020/052462**

(87) Numéro de publication internationale:
**WO 2021/123616 (24.06.2021 Gazette 2021/25)**

(54) **COMPOSANT DE DÉTECTION DE RAYONNEMENT ÉLECTROMAGNÉTIQUE À HAUTE SENSIBILITÉ ET PROCÉDÉ DE FABRICATION D'UN TEL COMPOSANT**

HOCHEMPFINDLICHES BAUTEIL ZUR DETEKTION ELEKTROMAGNETISCHER STRAHLUNG UND VERFAHREN ZUR HERSTELLUNG EINES SOLCHEN BAUTEILS

HIGH-SENSITIVITY ELECTROMAGNETIC RADIATION DETECTION COMPONENT AND METHOD FOR MANUFACTURING SUCH A COMPONENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.12.2019 FR 1914784**

(43) Date de publication de la demande:
**26.10.2022 Bulletin 2022/43**

(73) Titulaire: **Commissariat à l'Energie Atomique et aux Energies Alternatives**
**75015 Paris (FR)**

(72) Inventeurs:
• **YON, Jean-Jacques**
**38054 Grenoble Cedex 09 (FR)**
• **ALBOUY, Antoine**
**38054 Grenoble Cedex 09 (FR)**

(74) Mandataire: **Brevalex**
**Tour Trinity**
**1 B Place de la Défense**
**92400 Courbevoie (FR)**

(56) Documents cités:
**FR-A1- 3 056 292**

• **JOSEPH S ET AL: "Effect of channel layer doping on the performance of nanoscale DG MOSFETs", EMERGING TRENDS IN ELECTRONIC AND PHOTONIC DEVICES&SYSTEMS, 2009. ELECTRO '09. INTERNATIONAL CONFERENCE ON, IEEE, PISCATAWAY, NJ, USA, 22 December 2009 (2009-12-22), pages 49 - 52, XP032187986, ISBN: 978-1-4244-4846-3, DOI: 10.1109/ ELECTRO.2009.5441177**

EP 4 078 116 B1

## Description

Cette invention résulte d'un marché passé par le Ministère de la Défense qui dispose de certains droits dessus.

## Domaine technique

L'invention concerne le domaine de l'optoélectronique et de la détection de rayonnement électromagnétique.

L'invention a ainsi plus précisément pour objet un composant de détection de rayonnement électromagnétique et un procédé de fabrication d'un tel composant.

## État de l'art antérieur

Il est connu du document US 16/334109 d'utiliser des bolomètres basés sur des transducteurs MOSFET pour permettre la détection de rayonnement électromagnétique.

Selon l'enseignement du document US 16/334109 un tel composant comporte une structure de détection comprenant :

- au moins un élément absorbant configuré pour absorber le rayonnement électromagnétique,
- un transistor associé avec l'élément absorbant pour détecter l'élévation de température dudit élément absorbant lors de l'absorption du rayonnement électromagnétique, le transistor comportant :

   o au moins une première zone semiconductrice, dite zone source, et au moins une deuxième zone, dite zone de drain, d'un premier type de conductivité,
   o au moins une troisième zone semiconductrice, dite zone de canal, séparant l'une de l'autre la zone source et la zone de drain, présentant une première et une deuxième face opposées l'une à l'autre et s'étendant entre la zone source et la zone drain,
   o une première grille agencée en regard de la première face de la zone canal pour polariser la zone canal, ladite première grille formant l'élément absorbant,
   o une deuxième grille agencée en regard de la deuxième face de la zone canal pour polariser la zone canal.

Conformément à l'enseignement de ce document, la structure de détection est connectée à un circuit de lecture, qui fait office de circuit d'alimentation, au moyen d'une première piste de conduction qui polarise la zone source, la première grille et la deuxième grille et une deuxième piste de conduction qui polarise la zone de drain (en variante, il est également proposé que la première grille soit en court-circuit avec le drain). Ainsi, avec un tel branchement du circuit de lecture, le circuit de lecture est configuré pour que, en fonctionnement de la structure, la tension de la deuxième électrode de grille, généralement nommée grille arrière, soit mise au même potentiel que la première électrode de grille. Ainsi, la structure de détection peut fonctionner avec une tension entre la grille principale et la zone de source comprise entre 50 et 75 mV.

Si un tel composant de détection permet de fournir un composant de détection de rayonnement électromagnétique présentant une sensibilité augmentée vis-à-vis de l'art antérieur, il y aurait un intérêt à fournir des composants de détection de rayonnement électromagnétique qui présente une sensibilité améliorée vis-à-vis des composants de détection actuels, tels que celui enseigné par le document US 16/334109.

Le document FR3056292A1 présente un composant de détection de rayonnement électromagnétique selon l'état de la technique.

## Exposé de l'invention

L'invention a pour objet de remédier à cet inconvénient et a ainsi pour objet de fournir un composant de détection qui présente une sensibilité améliorée vis-à-vis des composants de l'art antérieur et notamment du composant enseigné par le document US 16/334109.

L'invention concerne à cet effet un composant de détection de rayonnement électromagnétique comprenant une structure de détection et un circuit d'alimentation de ladite structure de détection,

La structure de détection comprenant :

- au moins un élément absorbant configuré pour absorber le rayonnement électromagnétique,
- un transistor associé avec l'élément absorbant pour détecter l'élévation de température dudit élément absorbant lors de l'absorption du rayonnement électromagnétique, le transistor comportant :

   o au moins une première zone semiconductrice, dite zone source, et au moins une deuxième zone, dite zone de drain, chacune d'un premier type de conductivité,
   o au moins une troisième zone semiconductrice, dite zone de canal, séparant l'une de l'autre la zone source et la zone de drain, présentant une première et une deuxième face opposées l'une à l'autre, les première et deuxième faces s'étendant entre la zone source et la zone drain,
   o une première électrode grille agencée en regard de la première face de la zone canal pour polariser la zone canal, ladite première électrode de grille étant séparée de la zone canal par une première couche de diélectrique de grille,
   o une deuxième électrode de grille agencée en regard de la deuxième face de la zone canal pour la polariser la zone canal, ladite deuxième électrode de grille étant séparée de la zone canal par une deuxième couche de diélectrique de grille, dans lequel le circuit d'alimentation est configuré pour alimenter électriquement chacune de la zone source, de la zone de drain, et des première et deuxième électrodes de grille de la structure de détection en étant connecté à ces dernières, le circuit d'alimentation étant configuré pour alimenter la structure de détection en fonctionnement de telle manière que la zone de canal présente au niveau de l'une parmi la première et la deuxième face une couche dans laquelle les porteurs d'un deuxième type de conductivité opposé au premier type de conductivité sont prépondérants, ladite couche étant dite couche de blocage,.

Une telle configuration du circuit d'alimentation, et la couche de blocage qu'elle permet de créer, autorisent, comme l'on découvert les inventeurs, de diminuer l'efficacité (la force) du couplage entre la tension de grille et le potentiel de surface de la face du canal opposée à celle où la couche de blocage est créée. De ce fait, la variation du potentiel de surface est moins contrainte par la tension de grille et est plus apte à varier avec la température que celle qui caractérise l'art antérieur. Il en résulte donc une meilleure sensibilité de la structure de détection vis-à-vis des composants de l'art antérieur, tels que le composant enseigné par le document US 16/334109, ne comportant pas un tel circuit d'alimentation.

Les inventeurs ont ainsi obtenu, comme cela est montré dans la suite de ce document en relation avec les figures 1C et 5C, une augmentation du coefficient thermique de courant, plus connu sous son sigle anglais TCC, pouvant être supérieure à 1%.K$^{-1}$.

La caractéristique selon laquelle la « zone de canal présente au niveau de l'une parmi la première et la deuxième face une couche » dite couche de blocage, il doit être entendu que ladite couche de blocage comprend ladite face. Autrement dit, la couche de blocage s'étend dans la zone de canal à partir de ladite face.

La deuxième couche de diélectrique de grille peut présenter une épaisseur comprise entre 10 et 150 nm, l'épaisseur de la deuxième couche de diélectrique de grille étant préférentiellement comprise entre 30 et 70 nm.

Avec de telle valeur d'épaisseur de la deuxième couche de diélectrique de grille, l'amélioration de la sensibilité du composant de détection vis-à-vis des composants de détection de l'art antérieur est particulièrement importante.

Au moins l'une de la première et de la deuxième couche de diélectrique de grille peut comprendre une première et une deuxième sous-couche de respectivement un premier et un deuxième matériau diélectrique aptes à former un dipôle électrostatique entre eux, les premier et deuxième matériaux étant préférentiellement et respectivement du dioxyde de silicium et de l'alumine.

Avec un tel dipôle électrostatique, il est possible d'abaisser la tension à appliquer à dite électrode de grille en fonctionnement et donc réduire l'échauffement par effet joule de la structure de détection. De plus, une telle réduction de la tension à appliquer permet de rendre envisageable de mettre en court-circuit ladite électrode de grille avec la zone source, puisque le dipôle électrostatique permet de générer la différence de potentiel entre-elles.

La zone de canal peut comprendre dans une portion de la zone de canal destinée à former la couche de blocage une concentration en éléments dopants supérieure au reste de la zone de canal.

Un tel sur-dopage d'une portion de la zone de canal permet d'abaisser la tension à appliquer pour la formation de la couche de blocage puisque la zone de canal comporte un sur plus de porteur majoritaire pour permettre la formation de ladite couche de blocage. Ainsi, il est possible d'abaisser la tension à appliquer à l'électrode de grille correspondante en fonctionnement et donc réduire l'échauffement par effet joule de la structure de détection. De plus, une telle réduction de la tension à appliquer permet de rendre envisageable de mettre en court-circuit ladite électrode de grille avec la zone source, puisque le dipôle électrostatique permet de générer la différence de potentiel entre-elles.

La zone source et la première électrode de grille peuvent être court-circuitées.

La zone source et la deuxième électrode de grille peuvent être court-circuitées.

De cette manière, il est possible de réduire le nombre de connexion au circuit d'alimentation, facilitant ainsi l'isolation thermique de la structure de connexion vis-à-vis du circuit d'alimentation et de l'éventuel support dans lequel ledit circuit serait aménagé.

La zone de drain et la deuxième électrode de grille peuvent être court-circuitées.

La zone de drain et la première électrode de grille peuvent être court-circuitées.

De cette manière, il est possible de réduire le nombre de connexion au circuit d'alimentation, facilitant ainsi l'isolation thermique de la structure de connexion vis-à-vis du circuit d'alimentation et de l'éventuel support dans lequel ledit circuit serait aménagé.

La zone de canal peut être du premier type de conductivité, la couche de blocage étant une couche d'inversion et la deuxième électrode de grille est en court-circuit avec la première électrode de grille et avec la zone source.

Avec une telle configuration, il est possible d'appliquer une polarisation nulle aux première et deuxième électrodes de grille et à la zone de source, seule la zone de drain étant alors polarisée.

La zone de canal peut présenter le deuxième type de conductivité, la couche de de blocage étant une couche d'accumulation.

La zone de canal peut être du premier type de conductivité, la couche de blocage étant une couche d'inversion.

De telles configurations correspondent respectivement à un transistor à enrichissement et à un transistor à appauvrissement. On notera que cette dernière configuration est particulièrement intéressante pour fournir un structure de détection avec une tension de polarisation de la première grille relativement faible, celle-ci pouvant être même, dans certaines configurations, nulle (c'est-à-dire différence de potentiel entre la zone source et la première grille nulle).

L'élément absorbant comprend au moins l'un parmi :

- au moins une portion de la première électrode de grille,
- au moins une portion de la deuxième électrode de grille, et
- au moins une portion piste de conduction reliant la structure de détection et le circuit d'alimentation.

L'invention concerne en outre Procédé de fabrication d'un composant de détection de rayonnement électromagnétique, comprenant les étapes suivantes de :

- fourniture d'une structure de détection, la structure de détection comprenant :

  o au moins un élément absorbant configuré pour absorber le rayonnement électromagnétique,
  o un transistor associé avec l'élément absorbant pour détecter l'élévation de température dudit élément absorbant lors de l'absorption du rayonnement électromagnétique, le transistor comportant :

    • au moins une première zone semiconductrice, dite zone source, et au moins une deuxième zone semiconductrice, dite zone de drain, d'un premier type de conductivité,
    • au moins une troisième zone semiconductrice, dite zone de canal, séparant l'une de l'autre la zone source et la zone de drain, présentant une première et une deuxième face opposées l'une à l'autre et s'étendant entre la zone source et la zone drain,
    • une première électrode de grille agencée en regard de la première face de la zone de canal pour polariser la zone de canal,
    • une deuxième électrode de grille agencée en regard de la deuxième face de la zone de canal pour la polariser la zone de canal,

- fourniture d'un circuit d'alimentation configuré pour alimenter électriquement chacune de la zone source, de la zone de drain, et des première et deuxième électrodes de grille) de la structure de détection,

le procédé comprenant une étape de connexion de la structure de détection avec le circuit d'alimentation, ladite étape étant soit indépendante de l'étape de fourniture d'une structure de détection et de fourniture du circuit d'alimentation soit concomitante avec au moins l'une d'elles.

Lors de la fourniture du circuit d'alimentation, le circuit d'alimentation est configuré pour alimenter la structure de détection en fonctionnement de telle manière que la zone de canal présente au niveau de l'une parmi la première et la deuxième face une couche dans laquelle les porteurs d'un deuxième type de conductivité opposé au premier type de conductivité sont prépondérants, , ladite couche étant dite couche de blocage,.

Un tel procédé permet la fourniture d'un composant selon l'invention et de bénéficier des avantages qui y sont liés.

L'étape de fourniture de la structure de détection peut comprendre une sous étape de formation d'au moins l'une de la première et la deuxième couche de diélectrique de grille dans laquelle ladite couche de diélectrique de grille comprend une première et une deuxième sous-couche de respectivement un premier et un deuxième matériau diélectrique aptes à former un dipôle électrostatique entre eux, les premier et deuxième matériaux étant préférentiellement et respectivement du dioxyde de silicium et de l'alumine.

Avec un tel dipôle électrostatique, la structure de détection peut présenter une tension de l'électrode de grille correspondante abaissée et donc présenter un échauffement par effet joule réduit vis-à-vis des structures de détection de l'art antérieur. De plus, une telle réduction de la tension à appliquer permet de rendre envisageable de mettre en court-circuit ladite électrode de grille avec la zone source, puisque le dipôle électrostatique permet de générer la différence de potentiel entre-elles.

L'étape de fourniture de la structure de détection peut comprendre une sous étape de dopage de la zone de canal de manière à former une portion de la zone de canal, destinée à la formation de la couche de blocage, avec une concentration en éléments dopants supérieures au reste de la zone de canal.

Un tel sur-dopage d'une portion de la zone de canal permet à la structure de détection du composant formé de présenter une tension à appliquer pour la formation de la couche de blocage réduite puisque la zone de canal comporte un surplus de porteurs majoritaires pour permettre la formation de ladite couche de blocage. Ainsi, le composant de détection ainsi formé peut présenter une tension à appliquer à l'électrode de grille correspondante réduite et donc un échauffement par effet joule de sa structure de détection réduit. De plus, une telle réduction de la tension à appliquer permet de rendre envisageable de mettre en court-circuit ladite électrode de grille avec la zone source, puisque le dipôle électrostatique permet de générer la différence de potentiel entre-elles.

L'une de l'étape de formation de la structure de détection 100 et de l'étape de connexion de la structure de détection avec le circuit d'alimentation, peut comprendre une mise en court-circuit de la zone source et la première électrode de grille.

L'une de l'étape de formation de la structure de détection 100 et de l'étape de connexion de la structure de détection avec le circuit d'alimentation, peut comprendre une mise en court-circuit de la zone source et la deuxième électrode de grille.

L'une de l'étape de formation de la structure de détection et de l'étape de connexion de la structure de détection avec le circuit d'alimentation, peut comprendre une mise en court-circuit de la zone de drain et la deuxième électrode de grille.

L'une de l'étape de formation de la structure de détection et de l'étape de connexion de la structure de détection avec le circuit d'alimentation, peut comprendre une mise en court-circuit de la zone de drain et la première électrode de grille.

De cette manière, il est possible que le composant de connexion ainsi formé présente un nombre de connexions entre le circuit d'alimentation et la structure de détection réduit, facilitant ainsi l'isolation thermique de la structure de connexion vis-à-vis du circuit d'alimentation et de l'éventuel support dans lequel ledit circuit serait aménagé.

**Brève description des dessins**

La présente invention sera mieux comprise à la lecture de la description d'exemples de réalisation, donnés à titre purement indicatif et nullement limitatif, en faisant référence aux dessins annexés sur lesquels :

- les figures 1A à 1C illustrent le principe de fonctionnement d'un composant de détection selon une première possibilité de l'invention avec en figure 1A qui illustre par une vue en coupe l'alimentation d'une structure de détection selon cette première possibilité, la figure 1B qui illustre le principe de fonctionnement d'une telle structure de détection et la figure 1C qui illustre graphiquement la variation de la sensibilité d'une telle structure de détection en fonction du courant de drain comparée à celle d'une structure de détection enseignée par le document US 16/334109.,
- la figure 2 illustre le principe de fonctionnement d'un composant de détection selon une deuxième possibilité de l'invention en montrant, par une vue en coupe, l'alimentation d'une structure de détection selon cette deuxième possibilité de l'invention,
- la figure 3 illustre le principe de fonctionnement d'un composant de détection selon une troisième possibilité de l'invention en montrant, par une vue en coupe, l'alimentation d'une structure de détection selon cette troisième possibilité de l'invention,
- les figures 4A et 4B illustrent le principe de fonctionnement d'un composant de détection selon une quatrième possibilité de l'invention en montrant sur la figure 4A, par une vue en coupe, l'alimentation d'une structure de détection selon cette quatrième possibilité de l'invention et sur la figure 4B une structure de détection à rapport Longueur de canal L sur largeur du canal W optimisé,
- les figures 5A à 5C illustrent le principe de fonctionnement d'un composant de détection selon une cinquième possibilité de l'invention avec en figure 5A qui illustre par une vue en coupe l'alimentation d'une structure de détection selon cette cinquième possibilité, la figure 5B qui illustre le principe de fonctionnement d'une telle structure de détection et la figure 5C qui illustre graphiquement la sensibilité d'une telle structure de détection en fonction du courant de drain comparée à celle d'une structure de détection conforme à l'enseignement du document US 16/334109,
- la figure 6 illustre le principe de fonctionnement d'un composant de détection selon une sixième possibilité de l'invention en montrant, par une vue en coupe, l'alimentation d'une structure de détection selon cette sixième possibilité de l'invention,
- la figure 7 illustre le principe de fonctionnement d'un composant de détection selon une septième possibilité de l'invention en montrant, par une vue en coupe, l'alimentation d'une structure de détection selon cette septième possibilité de l'invention,
- la figure 8 illustre le principe de fonctionnement d'un composant de détection selon une huitième possibilité de l'invention en montrant, par une vue en coupe, l'alimentation d'une structure de détection selon cette huitième possibilité de l'invention,
- les figures 9A et 9B illustrent le principe de fonctionnement d'un composant de détection selon une neuvième possibilité de l'invention en montrant sur la figure 9A, par une vue en coupe, l'alimentation d'une structure de détection selon cette neuvième possibilité de l'invention et sur la figure 9B une structure de détection à rapport longueur de canal L sur largeur de canal W optimisé,
- la figure 10 illustre un composant de détection selon un premier mode de réalisation conforme à la première possibilité de l'invention,
- les figures 11A à 11H illustrent les principales étapes d'un procédé de fabrication d'un composant de détection selon le premier mode de réalisation,
- la figure 12 illustre un composant de détection selon un deuxième mode de réalisation conforme à la troisième possibilité de l'invention,
- les figures 13A et 13B illustrent respectivement une première et une deuxième étape spécifique d'un procédé de fabrication d'un composant de détection selon le deuxième mode de réalisation,

- la figure 14 illustre un composant de détection selon une variante du deuxième mode de réalisation conforme à la variante de la troisième possibilité de l'invention,
- la figure 15A à 15C illustrent, pour les figures 15A et 15B, une première et une deuxième étape spécifique d'un procédé de fabrication d'un composant de détection selon la variante du deuxième mode de réalisation et, pour la figure 15C, un graphique montrant le principe de dopage mise en oeuvre dans le cadre de la fabrication d'un composant de détection selon la variante au deuxième mode de réalisation de l'invention,
- les figures 16A et 16B illustrent un composant selon respectivement un troisième mode de réalisation conforme à la quatrième possibilité de l'invention et une variante de ce troisième mode de réalisation, la figure 16A illustrant une vue en coupe d'un tel composant de détection et la figure 16B illustrant une vue de dessous montrant les pistes de contact de ladite variante permettant la polarisation des zones source et de drain et des première et deuxième électrodes de grille,
- la figure 17 illustre un composant de détection selon un quatrième mode de réalisation conforme à la cinquième possibilité de l'invention,
- la figure 18 illustre un composant de détection selon un cinquième mode de réalisation conforme à la septième possibilité de l'invention,
- les figures 19A et 19B illustrent respectivement une première et une deuxième étape spécifique d'un procédé de fabrication d'un composant de détection selon le cinquième mode de réalisation,
- la figure 20 illustre un composant de détection selon une variante du cinquième mode de réalisation conforme à une variante de la septième possibilité de l'invention,
- les figures 21A et 21B illustrent respectivement une première et une deuxième étape spécifique d'un procédé de fabrication d'un composant de détection selon la variante du cinquième mode de réalisation,
- la figure 22 illustre un composant selon un sixième mode de réalisation conforme à la huitième possibilité de l'invention,
- les figures 23A et 23B illustrent respectivement une vue en coupe d'un composant selon un septième mode de réalisation conforme à la neuvième possibilité de l'invention et une vue de dessous de ce même composant, ladite vue montrant les pistes de contact permettant la polarisation des zones source et de drain et des première et deuxième électrodes de grille,
- les figures 24A à 24C illustrent respectivement une première à une troisième étape spécifique d'un procédé de fabrication d'un composant de détection selon le septième mode de réalisation.

Des parties identiques, similaires ou équivalentes des différentes figures portent les mêmes références numériques de façon à faciliter le passage d'une figure à l'autre.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

## Description des modes de réalisation

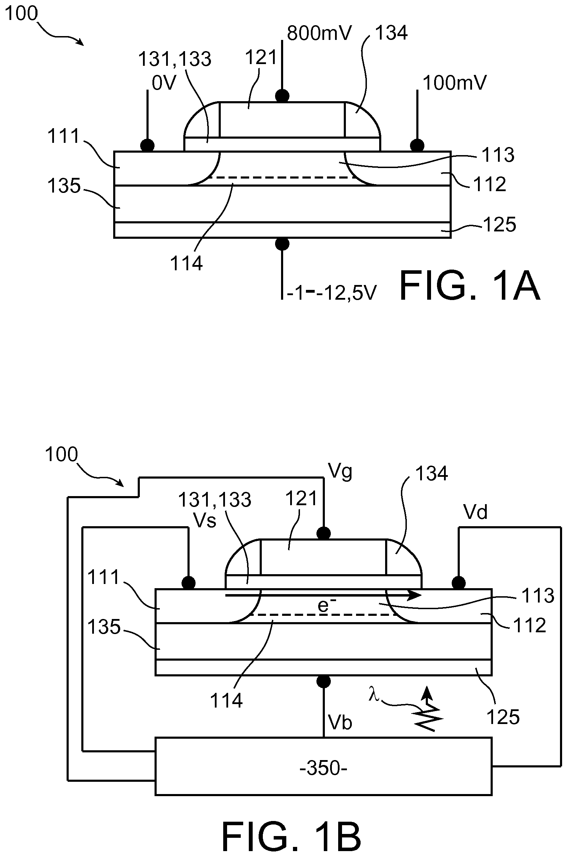

Les figures 1A et 1B illustrent respectivement une vue en coupe d'une structure de détection 100 et d'un composant de détection 1 comprenant une telle structure selon le principe de l'invention, un tel composant de détection étant adapté pour la détection de rayonnement électromagnétiques $\lambda$.

Un tel composant de détection 1 vise plus particulièrement la détection de rayonnement électromagnétique dans la gamme de longueurs d'onde des infrarouges. Ainsi, les différentes valeurs indiquées dans les modes de réalisation décrits ci-après concernent cette application pratique, dans laquelle la gamme de longueurs d'onde visée est l'infrarouge lointain, c'est-à-dire entre 8 et 12 $\mu m$. Bien entendu, l'homme du métier est parfaitement à même, à partir de la présente divulgation, d'adapter ces valeurs afin de permettre à l'aide d'une telle structure de détection 100 la détection optimisée de rayonnement électromagnétique dans une gamme de longueurs d'onde autre que celle des infrarouges.

On notera que la présente invention vise en particulier les composants de détection comportant une pluralité de structures de détection agencées en matrice avec un pas de réseau de ladite matrice de 10 $\mu m$ ou moins. Ainsi, si dans la présente description, le composant est décrit en lien avec une seule structure de détection, l'invention, bien entendu, offre la possibilité d'un composant comprenant une pluralité de structure de détection, l'homme du métier étant à même d'extrapoler le présent enseignement pour une telle configuration.

### Principe de l'invention

Ainsi, selon le principe de l'invention, comme montré sur la figure 1B, un composant de détection selon l'invention comprend la structure de détection 100 et un circuit d'alimentation (350) de ladite structure de détection 100,

La structure de détection 100 comprenant :

- au moins un élément absorbant configuré pour absorber le rayonnement électromagnétique,
- un transistor associé avec l'élément absorbant pour détecter l'élévation de température dudit élément absorbant lors de l'absorption du rayonnement électromagnétique $\lambda$, le transistor comportant :

o au moins une première zone semiconductrice 111, dite zone source, et au moins une deuxième zone 112, dite zone de drain, chacune d'un premier type de conductivité,

o au moins une troisième zone semiconductrice 113, dite zone de canal, séparant l'une de l'autre la zone source 111 et la zone de drain 112, présentant une première et une deuxième face opposées l'une à l'autre, les première et deuxième faces s'étendant entre la zone source 111 et la zone drain 112,

o une première électrode de grille 121 agencée en regard de la première face de la zone canal 113 pour polariser la zone canal 113, la première électrode de grille 121 étant séparée de la première face de la zone canal 113 par une première couche de diélectrique de grille 131,

o une deuxième électrode de grille 125 agencée en regard de la deuxième face de la zone canal 113 pour polariser la zone canal 113, la deuxième électrode de grille 125 étant séparée de la deuxième face de la zone canal 113 par une deuxième couche de diélectrique de grille 135.

Le circuit d'alimentation 350 est configuré pour alimenter électriquement la structure de détection 100 au niveau de la zone source 111, de la zone de drain 112, et des première et deuxième électrodes de grille 121, 125. Plus précisément, le circuit d'alimentation 350 est configuré pour alimenter la structure de détection 100 en fonctionnement de telle manière que la zone de canal 113 présente au niveau de l'une parmi la première et la deuxième face une couche 114 dans laquelle les porteurs d'un deuxième type de conductivité opposé au premier type de conductivité sont prépondérants, ladite couche 114 étant dite couche de blocage

Bien entendu, si selon cette première possibilité de l'invention, et selon les autres possibilités décrites dans le présent document, le circuit d'alimentation 350 est adapté pour alimenter électriquement en tension la structure de détection 100, il est également envisageable, sans que l'on sorte du cadre de l'invention, que l'alimentation de la structure soit réalisée au moins en partie en courant. Si cette variante n'est pas décrite plus en avant dans le présent document, elle peut néanmoins être aisément implémentée par l'homme du métier à partir du présent enseignement.

L'élément absorbant, selon la première possibilité illustrée sur la figure 1B, comprend la deuxième électrode de grille 125. Bien entendu, conformément à l'enseignement du document US 16/334109, l'élément absorbant peut être fourni par un autre élément de structure de détection 100, tel que la première électrode de grille 121 ou des pistes d'interconnexion permettant de connecter la structure de détection 100 au circuit d'alimentation 350, cet élément absorbant étant en contact thermique avec le transistor.

On notera que pour un tel composant de détection 1, la zone de canal peut être :

(i) soit du deuxième type de conductivité ou du type intrinsèque, le transistor étant alors un transistor du type NPN ou PNP, et la couche de blocage 114 étant une couche d'accumulation,

(ii) soit du premier type de conductivité avec une concentration en porteurs majoritaires réduite vis-à-vis de celle de la zone source 111 et de la zone de drain 112, la couche de blocage est alors une couche d'inversion.

La configuration (ii) est une configuration dans laquelle le transistor de la structure de détection est un transistor dit à appauvrissement ou déplétée. Un tel transistor, d'un type N+NN+ ou P+PP+, est, en l'absence de tension sur la grille, dans un état conducteur, la zone canal étant du même type de conductivité que les zones source et de drain. En polarisant de manière adaptée la grille relativement à la source, c'est-à-dire généralement négativement, dans le cas d'un transistor N+NN+, et positivement, dans le cas d'un transistor P+PP+, voire nulle dans les deux cas, il est alors possible de dépléter la zone de canal, voire d'inverser le type de conductivité dans cette dernière de telle manière à bloquer la conduction dans la zone canal.

Dans le cadre d'un composant de type détecteur de rayonnement électromagnétique, les inventeurs proposent d'utiliser un transistor à appauvrissement pour obtenir le courant de fonctionnement souhaité du transistor avec une polarisation de grille nulle même en présence d'une couche de blocage.

En effet, la tension de seuil d'un transistor sans couche de blocage est, pour un transistor à appauvrissement, négative ou proche de zéro, et, pour un transistor à enrichissement, positive ou proche de zéro. Créer une couche de blocage a pour effet d'augmenter la tension de seuil du transistor. Un transistor à enrichissement n'est donc pas adapté pour obtenir un courant de fonctionnement du transistor avec une polarisation de grille nulle même en présence d'une couche de blocage. Utiliser un transistor à appauvrissement avec une couche de blocage, dont la tension de seuil devient positive ou proche de zéro, permet donc d'obtenir un courant de fonctionnement souhaité du transistor avec une polarisation de grille nulle même en présence d'une couche de blocage.

Une telle proposition d'utiliser un transistor à appauvrissement pour la détection de rayonnement électromagnétique selon le principe du bolomètre est nouvelle vis-à-vis des composants de l'art antérieur, tels que celui proposé par le document US 16/334109.

Ainsi, selon le principe de l'invention, les tensions d'alimentations fournies par le circuit d'alimentation 350 à la structure sont telles que, pour la conformation (i), la couche de blocage 114 est une couche d'accumulation, et, pour la conformation (ii), la couche de blocage est une couche d'inversion. Autrement dit, que ce soit pour la conformation (i) et (ii), la couche de blocage 114 est une couche dans laquelle, en fonctionnement du composant, la conduction entre la zone source 111 et la zone de drain 112, le courant est bloqué, le courant parcourant la zone de canal 113 devant passer par le reste de la zone de canal 113. De ce fait, conformément à l'invention, le circuit d'alimentation est alors configuré pour alimenter la structure de détection 100 de telle manière à avoir le reste de la zone de canal 113 qui est en inversion, pour la configuration (i) ou en déplétion, en régime neutre ou en accumulation, pour la configuration (ii) selon la tension appliquée sur la grille opposée à la couche de blocage.

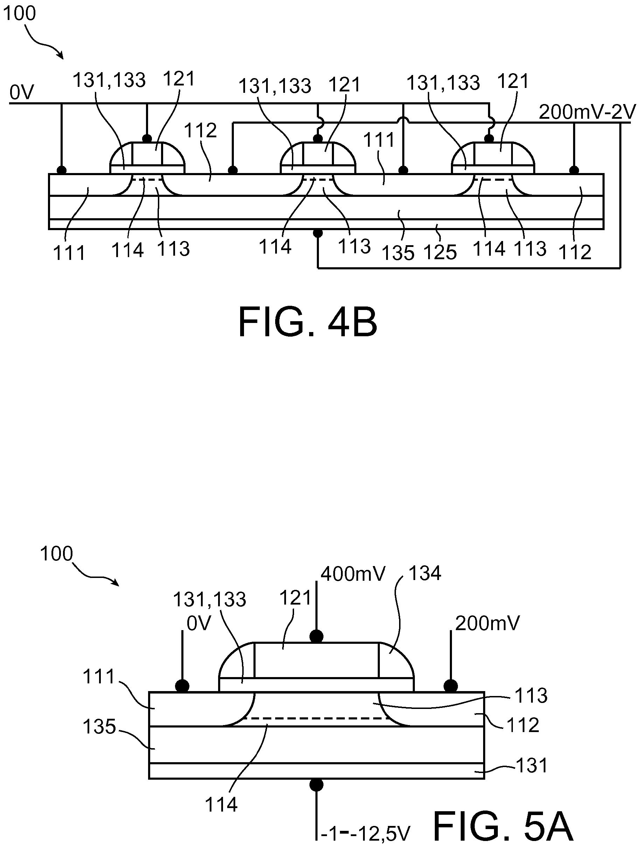

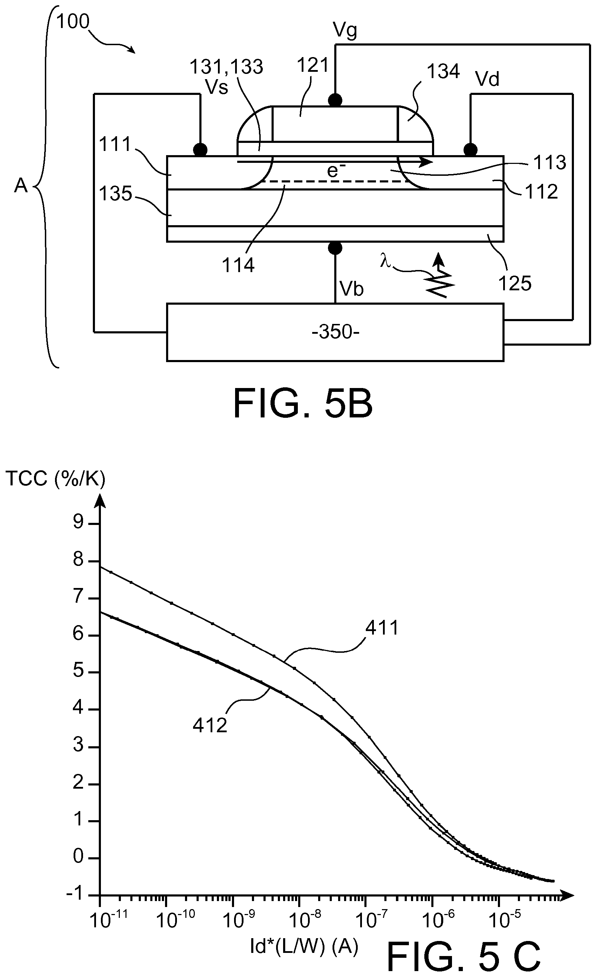

Ainsi le principe général de l'invention peut être mis en oeuvre de plusieurs façons qui sont illustrés sur les figures 1A à 9B avec les figures 1A à 4B concernant la conformation (i) et les figures 5A à 9B concernant la conformation (ii).

Dans le cadre de la description de ces différentes possibilités de l'invention, afin de définir les tensions relatives appliquées par le circuit d'alimentation à la structure de détection 100, les caractéristiques de la structure de détection 100 exemplaire ont été fixées comme suit :

- une zone source 111 et une zone de drain 112 d'un premier type de conductivité dans lequel les électrons sont les porteurs majoritaires, c'est-à-dire dopées N, et présentant une concentration en éléments dopants donneurs d'électrons égale à $1.10^{20}$ cm$^{-3}$,
- une zone de canal 113 présentant, pour les première à la quatrième possibilités correspondant à la conformation (i), le deuxième type de conductivité, c'est-à-dire ici dopée P, avec une concentration en éléments dopants accepteurs d'électrons de $1.10^{15}$ cm$^{-3}$, et pour les cinquième à la neuvième possibilités correspondant à la conformation (ii), le premier type de conductivité avec une concentration en éléments dopants donneurs d'électrons égale à une concentration entre $1.10^{16}$ cm$^{-3}$ et $1.10^{17}$ cm$^{-3}$,
- des zones source 111, de drain 112 et de canal 113 réalisées en silicium et présentant une épaisseur de 50 nm,
- une première couche de diélectrique de grille 131 qui, sans autre précision, présente une épaisseur de 9 nm et est réalisée en dioxyde de silicium,
- une deuxième couche de diélectrique de grille 135 présentant une épaisseur comprise entre 10 nm et 150 nm et étant réalisée en dioxyde de silicium,
- une première électrode grille et une deuxième électrode de grille 121, 125 comprenant un matériau conducteur du type milieu-de-gap pour la zone de canal 113.

On entend ci-dessus et dans le reste de ce document par « matériau conducteur du type milieu-de-gap » que le matériau conducteur est choisi de manière à présenter, en absence de polarisation de la structure, son énergie de Fermi dans la zone de bande interdite de la troisième zone et plus précisément au voisinage du milieu de la bande interdite de la troisième zone, typiquement à un niveau d'énergie distant du milieu de la bande interdite dans une gamme comprise entre -25% et +25% du gap de la bande interdite. Une telle configuration de grille est généralement connue par l'homme du métier sous la dénomination anglaise de « mid-gap ». Ainsi dans le cas où la troisième zone est réalisée en silicium, les « matériaux conducteur du type milieu-de-gap » comportent notamment les nitrures de titane, les nitrures de tantale et les siliciures de molybdène.

Les caractéristiques de la structure de détection 100 décrites ci-dessus ont été fixées pour un transistor de type N. Elles pourraient être fixées pour s'adapter à un transistor de type P sans sortir du cadre de l'invention.

On notera, de plus, que les différentes valeurs/configuration explicité ci-dessus ne sont données qu'à titre d'exemple pour illustrer les différentes possibilités de l'invention, il est ainsi possible d'utiliser différentes valeurs/configuration sans sortir du cadre de l'invention, tant que ces dernières permettent, conformément au principe de l'invention, autorise la formation d'une couche de blocage 114 lors de l'alimentation de la structure de détection par le circuit d'alimentation. Ainsi, par exemple, au moins l'une de la première électrode de grille 121 et de la deuxième électrode de grille 125, donc, voire les deux, peut ne pas comporter de matériau conducteur du type milieu-de-gap pour la zone canal, sans que l'on sorte du cadre de l'invention.

*Première possibilité :*

Selon une première possibilité de l'invention, illustrée sur les figures 1A à 1C, le circuit d'alimentation 350 peut être conformé pour alimenter électriquement de manière indépendante chacune de la zone source 111, la zone de drain 112, la première électrode 121 et la deuxième électrode 125 et pour former la couche de blocage 114 au niveau de la deuxième face de la zone de canal 113.

Selon cette première possibilité et avec la configuration exemplaire décrite ci-dessus dans la partie « principe de l'invention », le circuit d'alimentation 350 peut être configuré pour appliquer en fonctionnement :

- une tension source Vs nulle, 0V, à la zone source 111,
- une tension drain Vd de 100 mv à la zone de drain 112,
- une tension de grille Vg sur la première électrode de grille 121, prévue pour ajuster le courant de fonctionnement du transistor, par exemple une tension Vg de 800mV et
- une tension de grille arrière Vb négative comprise entre -1 V et -12,5 à la deuxième électrode de grille 125, cette tension de grille Vb devant être adaptée en fonction de l'épaisseur de la deuxième couche de diélectrique de grille 135.

Ces valeurs sont bien entendues valables uniquement pour la configuration exemplaire décrite dans le Principe de l'invention et ne limite en rien l'invention. On notera ainsi, par exemple que, dans le cas où l'une de la première et de la deuxième grille ne serait pas réalisée dans un matériau « mid-gap », la tension correspondante devrait être à ajuster.

De cette manière, la tension de grille arrière Vb négative permet de créer une couche de blocage 114 prenant la forme d'une couche d'accumulation au niveau de la deuxième face de la zone de canal 113.

Une telle couche de blocage 114 autorise, selon le principe de l'invention et comme l'on découvert les inventeurs, de diminuer l'efficacité (la force) du couplage entre la tension de grille et le potentiel de surface de la face du canal opposée à celle où la couche de blocage est créée. De ce fait, la variation du potentiel de surface est moins contrainte par la tension de grille et est plus apte à varier avec la température que celle qui caractérise l'art antérieur. Il en résulte donc une meilleure sensibilité de la structure de détection vis-à-vis des composants de l'art antérieur comme celui enseigné par le document US 16/334109.

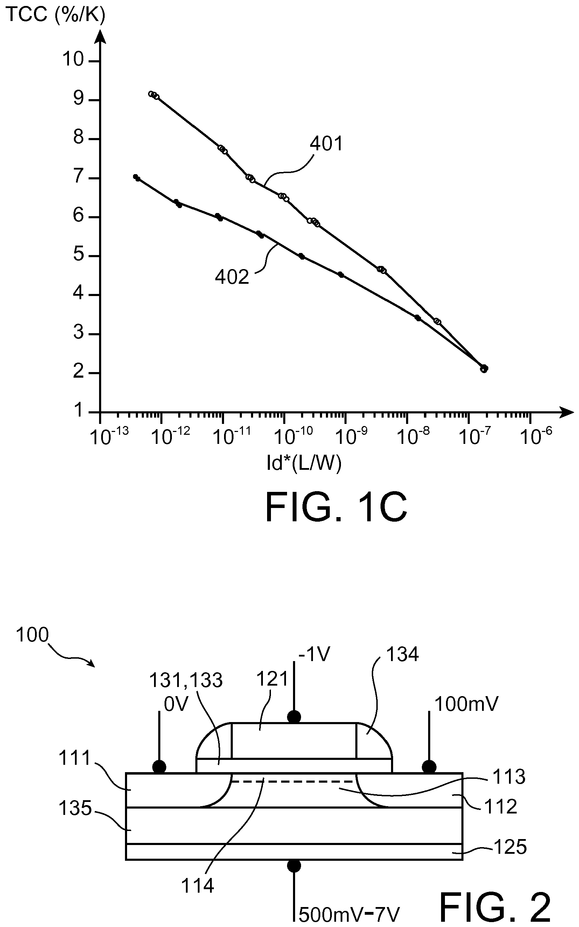

Ainsi, afin d'illustrer cette amélioration de sensibilité, la figure 1C illustre la variation du coefficient thermique de courant, plus connu sous son sigle anglais TCC, avec le courant du transistor normalisé par le rapport largeur sur longueur du transistor pour un composant selon cette première possibilité, cette variation étant référencée 401, et pour un transistor, présentant les mêmes caractéristiques, conforme à l'enseignement du document US 16/334109, cette variation étant référencée 402. Les caractéristiques communes sont : outre celles déjà explicitées, une longueur de canal de 500 nm, afin de normaliser le courant, et une épaisseur de la deuxième couche d'oxyde de 145 nm.

On observe ainsi sur la figure 1C que, pour des courants normalisés allant de 100 pA à 1 nA, l'augmentation du coefficient thermique de courant pour la configuration de l'invention est supérieure à $0.9\%.K^{-1}$ et est de l'ordre de $0,5\%.K^{-1}$ pour les courants normalisés compris entre 10 nA et 50 nA. De plus, les inventeurs ont identifié que cette augmentation est accompagnée par une réduction du bruit 1/f du transistor. Ainsi, avec une sensibilité augmentée et un bruit 1/f réduit, un composant de détection 1 selon l'invention présente un rapport signal/bruit particulièrement optimisé vis-à-vis des composants de l'art antérieur. Cette réduction du bruit 1/f est attribuable à l'utilisation de la couche de blocage 114 et est donc également obtenue dans le cadre des autres possibilités de l'invention.

*Deuxième possibilité* :

Selon une deuxième possibilité de l'invention illustrée sur la figure 2, le circuit d'alimentation 350 peut être conformé pour alimenter électriquement de manière indépendante chacune de la zone source 111, la zone de drain 112, la première électrode 121 et la deuxième électrode 125 et pour former la couche de blocage 114 au niveau de la première face de la couche de canal 113.

Selon cette deuxième possibilité et avec la configuration exemplaire décrite dans la partie « principe de l'invention », le circuit d'alimentation 350 peut être configuré pour appliquer en fonctionnement :

- une tension source Vs nulle, 0V, à la zone source 111,
- une tension drain Vd de 100 mV à la zone de drain 112,
- une tension de grille Vg de -1 V sur la première électrode de grille 121, et
- une tension de grille arrière Vb positive comprise entre 500 mV et 7 V à la deuxième électrode de grille 125, cette tension de grille arrière Vb devant être adaptée en fonction de l'épaisseur de la deuxième couche de diélectrique de grille 135 et du courant de fonctionnement du transistor.

Ainsi, la tension de grille Vg négative permet de créer une couche de blocage 114 prenant la forme d'une couche d'accumulation au niveau de la première face de la zone de canal 113.

On notera que selon une variante à cette première et deuxième possibilité, le circuit d'alimentation 350 peut être configuré pour alimenter la structure de détection selon la première possibilité et selon la deuxième possibilité, le circuit d'alimentation 350 pouvant être commandé pour passer de l'une à l'autre ou configuré pour passer de l'une à l'autre en fonction de certaines conditions, comme par exemple des conditions internes du composant, telles que le courant source-drain Ids ou de conditions externes du composant, telles qu'une instruction de passage de l'une à l'autre de la première et deuxième possibilité.

*Troisième possibilité* :

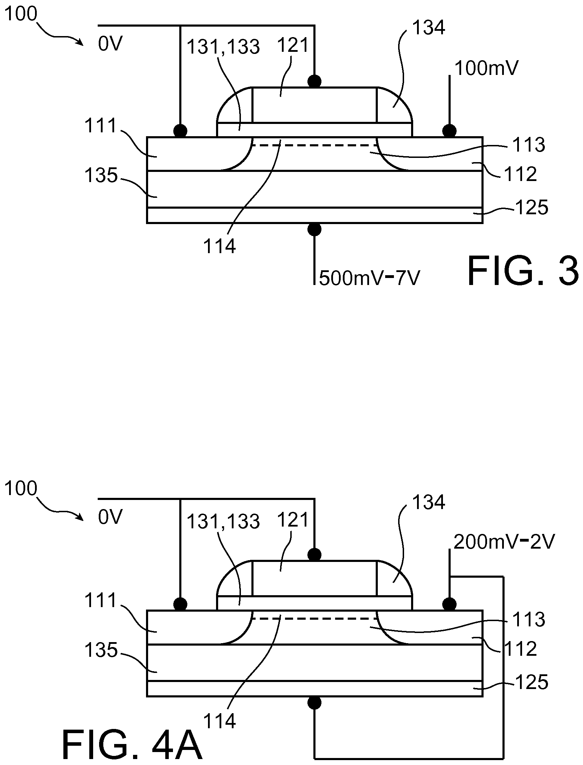

Selon une troisième possibilité de l'invention illustrée sur la figure 3, le circuit d'alimentation 350 peut être conformé pour appliquer la même tension à la zone source 111 et à la première électrode de grille 121, la zone de drain 112, et la deuxième électrode de grille 125 étant alimentées indépendamment l'une de l'autre et du couple zone source 111/ première électrode de grille, et pour former la couche de blocage 114 au niveau de la première face de la couche de canal 113. De plus, pour autoriser une telle polarisation, selon cette troisième possibilité, la structure de détection 100 présente une « pré-polarisation», c'est-à-dire un moyen d'application d'un potentiel « interne » afin d'abaisser la tension seuil de la première électrode grille 121, de la couche de blocage 114 fournie par :

- soit, une première couche de diélectrique de grille 121 comprenant une première et une deuxième sous-couche de respectivement un premier et un deuxième matériau diélectriques aptes à former ensemble une interface dipolaire par la création d'un dipôle électrostatique entre eux,
- soit, un sur-dopage d'une portion de la zone de canal destinée à la formation de la couche de blocage 114 en éléments dopants accepteurs d'électrons, tels que des atomes de bore ou d'indium obtenus par implantation ionique d'ions de Bore B, d'ions de fluorure de Bore BF2 ou d'ions d'indium In.

Ainsi, avec une telle interface dipolaire de la première couche d'oxyde de la grille 121 ou un tel sur-dopage d'une portion de la zone de canal 113 destinée à la formation de la couche de blocage 114, tous deux équivalents à une pré-polarisation de la zone de canal 113 au niveau de sa première face, il est possible d'avoir un décalage de la tension de seuil de la première électrode grille de +1 V, voir si on combine ces deux possibilités, un décalage de la tension de seuil de la première électrode grille 121 de +2 V. Il en résulte avec une telle « pré-polarisation » au niveau de la première électrode de grille 121, qu'il n'est pas nécessaire d'appliquer une tension négative pour former la couche de blocage comme cela est le cas dans le cadre de la deuxième possibilité.

Selon cette troisième possibilité de l'invention et avec la configuration exemplaire décrite dans la partie « principe de l'invention », le circuit d'alimentation 350 peut être configuré pour appliquer en fonctionnement :

- une tension source Vs et de grille Vg nulle, 0V, appliquée à la zone source 111 et à la première électrode de grille 121,
- une tension drain Vd de 100 mV à la zone de drain 112, et
- une tension de grille arrière Vb positive comprise entre 500 mV et 7V à la deuxième électrode de grille 125, cette tension de grille arrière Vb devant être adaptée en fonction de l'épaisseur de la deuxième couche de diélectrique de grille 135 et du courant de fonctionnement du transistor.

Une telle troisième possibilité présente l'avantage que, comme la zone source 111 et la première électrode de grille 121 sont court-circuitées, il n'est nécessaire de prévoir que trois interconnexions entre la structure de détection 100 et le circuit d'alimentation 350. De cette manière, on limite les échanges thermiques entre la structure de détection et le circuit d'alimentation 350 qui peuvent réduire la température atteinte par l'absorbeur et par conséquent la sensibilité du composant de détection 1.

*Quatrième possibilité :*

Selon une quatrième possibilité de l'invention illustrée sur les figures 4A et 4B, le circuit d'alimentation 350 peut être conformé pour alimenter la zone source 111 et la première électrode de grille 121 ensemble, pour alimenter la zone de drain 112 et la deuxième électrode de grille 125 ensemble, et pour former la couche de blocage 114 au niveau de la première face de la couche de canal 113. De plus, pour autoriser une telle polarisation, selon cette quatrième possibilité, la structure de détection 100 présente une « pré-polarisation » de la couche de blocage 114 similaire à celle décrite dans le cadre de la troisième possibilité.

Conformément à cette quatrième possibilité, afin de réduire au minimum la tension de polarisation de la deuxième électrode de grille 125 et donc de la tension appliquée à la zone de drain 112, l'épaisseur de la deuxième couche de diélectrique de grille 131 est choisie comme relativement faible, celle-ci pouvant être comprise entre 20 nm et 50 nm et préférentiellement entre 25 et 35 nm, voire sensiblement égale à 30 nm. En complément, la tension de polarisation de la deuxième électrode de grille 125 et donc de la tension appliquée à la zone de drain 112 peut également être réduite par une optimisation du rapport largeur de la zone de canal/ sur la longueur de la zone de canal, ce rapport étant préférentiellement supérieur à 150, voire 250, voire encore à 300.

Selon cette quatrième possibilité de l'invention et avec la configuration exemplaire décrite dans la partie « principe de l'invention », le circuit d'alimentation 350 peut être configuré pour appliquer en fonctionnement :

- une tension source Vs et de grille Vg nulle, 0V, appliquée à la zone source 111 et à la première électrode de grille 121,
- une tension drain Vd et de de grille arrière Vb comprise entre 200 mV et 2V appliquée à la zone de drain 11 et à la deuxième électrode de grille 125, cette tension devant être adaptée en fonction de l'épaisseur de la deuxième couche de diélectrique de grille 135 et du courant de fonctionnement du transistor et donc de la structure de détection.

Une telle quatrième possibilité présente l'avantage que, du fait que la zone source 111 et la première électrode de grille 121 sont court-circuitées et que la zone de drain 112 et la deuxième électrode de grille 125 sont court-circuitées, il n'est nécessaire de prévoir que deux interconnexions entre la structure de détection 100 et le circuit d'alimentation 350. De cette manière, on limite les échanges thermiques entre la structure de détection et le circuit d'alimentation 350 qui peuvent réduire la température atteinte par l'absorbeur et par conséquent la sensibilité du composant de détection 1.

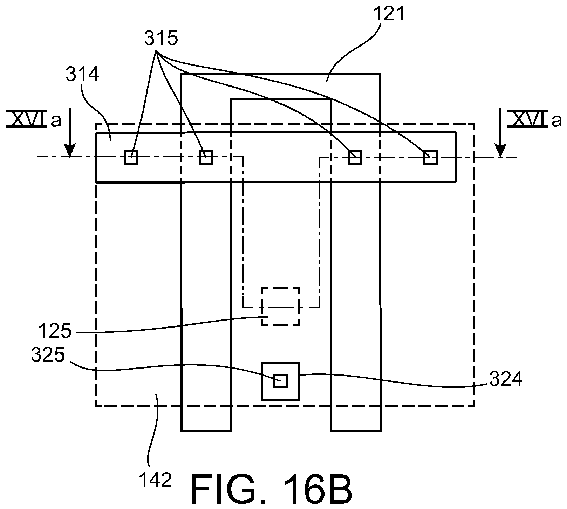

La figure 4B illustre une configuration particulière de la structure de détection 100 selon cette quatrième possibilité dans laquelle la structure de détection 100 présente un rapport largeur de la zone de canal/ sur la longueur de la zone de canal optimisé. Une telle optimisation est ici obtenue par une configuration à grille triple, ou « en peigne à trois dents » (ce conférer à la figure 16B qui illustre un exemple à grille double ou « en peigne à deux dents »), la structure comprenant une zone source 111 et une zone de drain 112 dédoublées et une zone de canal triplée. En effet, comme le montre la figure 4B, la structure de détection est formée par la succession d'une « première » sous-zone source 111, d'une « première » sous-zone de canal 113, d'une « première » sous-zone de drain 112, d'une « deuxième » sous-zone de canal 113, d'une « deuxième » sous-zone source 111, d'une « troisième » sous-zone de canal 113 et d'une « deuxième » sous-zone de drain 112.

Bien entendu, en conformité à cet exemple, l'homme du métier est à même de généraliser une telle configuration et est à même, afin d'optimiser le rapport largeur de la zone de canal/ sur la longueur de la zone de canal, d'utiliser une configuration à grilles multiples ou en « peigne à multiple dents », le nombre de grilles ou de « dents » pouvant étant supérieur ou égale à 2.

*Cinquième possibilité :*

La cinquième possibilité, correspond à la première possibilité de l'invention appliquée à une structure comprenant un transistor à appauvrissement.

Ainsi, selon cette cinquième possibilité de l'invention, illustrée sur les figures 5A à 5C, le circuit d'alimentation 350 peut être conformé pour alimenter électriquement de manière indépendante chacune de la zone source 111, la zone de drain 112, la première électrode 121 et la deuxième électrode 125 et pour former la couche de blocage 114 au niveau de la deuxième face de la couche de canal 113.

Selon cette cinquième possibilité de l'invention et avec la configuration exemplaire décrite dans la partie « principe de l'invention », le circuit d'alimentation 350 peut être configuré pour appliquer en fonctionnement :

- une tension source Vs nulle, 0V, à la zone source 111,
- une tension drain Vd de 200 mv à la zone de drain 112,
- une tension de grille Vg sur la première électrode de grille 121, prévue pour ajuster le courant de fonctionnement du transistor, par exemple une tension Vg de 400mV et
- une tension de grille arrière Vb négative comprise entre -1 V et -12,5 V à la deuxième électrode de grille 125, cette tension de grille Vb devant être adaptée en fonction de l'épaisseur de la deuxième couche de diélectrique de grille 135.

De cette manière, la tension de grille arrière Vb négative permet de créer une couche de blocage 114 prenant la forme d'une couche d'inversion au niveau de la deuxième face de la zone de canal 113.

De la même façon que pour les structures comprenant un transistor classique de type MOSFET conformément à la première possibilité, une telle couche de blocage 114 autorise, selon le principe de l'invention et comme l'on découvert les inventeurs, de diminuer l'efficacité (la force) du couplage entre la tension de grille et le potentiel de surface de la face du canal opposée à celle où la couche de blocage est créée. De ce fait, la variation du potentiel de surface est moins contrainte par la tension de grille et est plus apte à varier avec la température que celle qui caractérise l'art antérieur. Il en résulte donc une meilleure sensibilité de la structure de détection vis-à-vis des composants de l'art antérieur comme celui enseigné par le document US 16/334109.

Ainsi, afin d'illustrer cette amélioration de sensibilité, la figure 5C illustre la variation du coefficient thermique de courant, plus connu sous son sigle anglais TCC, avec le courant du transistor normalisé par le rapport largeur sur longueur du transistor calculée pour un composant selon cette cinquième possibilité, cette variation étant référencée 411, et pour un transistor, présentant les mêmes caractéristiques et qui correspondrait à l'enseignement du document US 16/334109 appliqué à un transistor à appauvrissement, cette variation étant référencée 412. Les caractéristiques communes sont : outre celles déjà explicitées, une longueur de canal de 500 nm, afin de normalisé le courant, et une épaisseur de la deuxième couche d'oxyde de 145 nm.

On observe ainsi sur la figure 1C que, pour des courants normalisés allant de 100 pA à 10 nA, l'augmentation du coefficient thermique de courant pour la configuration de l'invention est supérieure à $1\%.K^{-1}$ et est supérieure à $0,5\%.K^{-1}$ pour les courants normalisés compris entre 10 nA à 100 nA. De plus, les inventeurs ont identifié que, dans le cas des transistors à appauvrissement également, cette augmentation est accompagnée par une réduction du bruit 1/f du transistor. Ainsi, avec une sensibilité augmentée et un bruit 1/f réduit, un composant de détection 1 selon l'invention présente un rapport signal/bruit particulièrement optimisé vis-à-vis des composants de l'art antérieur.

*Sixième possibilité :*

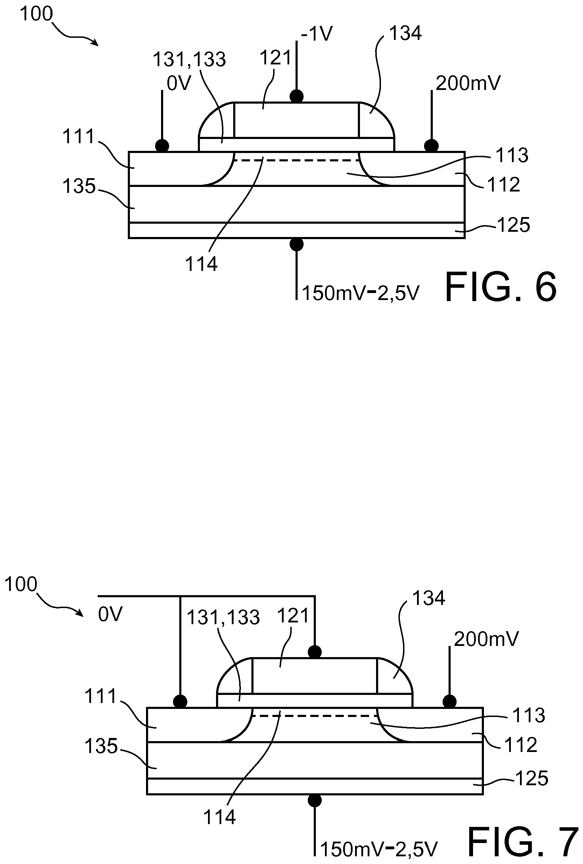

Selon une sixième possibilité de l'invention illustrée sur la figure 6, le circuit d'alimentation 350 peut être conformé pour alimenter électriquement de manière indépendante chacune de la zone source 111, la zone de drain 112, la première électrode 121 et la deuxième électrode 125 et pour former la couche de blocage 114 au niveau de la première face de la couche de canal 113.

Selon cette sixième possibilité de l'invention et avec la configuration exemplaire décrite dans la partie « principe de l'invention », le circuit d'alimentation 350 peut être configuré pour appliquer en fonctionnement :

- une tension source Vs nulle, 0V, à la zone source 111,
- une tension drain Vd de 200 mv à la zone de drain 112,
- une tension de grille Vg de -1 V sur la première électrode de grille 121, et
- une tension de grille arrière Vb positive comprise entre 150 mV et 2.5V à la deuxième électrode de grille 125, cette tension de grille arrière Vb devant être adaptée en fonction de l'épaisseur de la deuxième couche de diélectrique de grille 135 et du courant de fonctionnement du transistor.

Ainsi, la tension de grille Vg négative permet de créer une couche de blocage 114 prenant la forme d'une couche d'inversion au niveau de la première face de la zone de canal 113, la tension de grille arrière étant choisie pour mettre en déplétion en régime neutre ou en accumulation, le reste de la zone de canal selon la tension appliquée sur la grille opposée à la couche de blocage.

Conformément aux première et deuxième possibilités décrites précédemment et selon une variante à cette cinquième et sixième possibilité, le circuit d'alimentation 350 peut être configuré pour alimenter la structure de détection selon la cinquième possibilité et selon la sixième possibilité, le circuit d'alimentation pouvant être commandé pour passer de l'une à l'autre ou configuré pour passer de l'une à l'autre en fonction de certaines conditions, comme par exemple des conditions internes du composant, telles que le courant source-drain Ids ou de conditions externes du composant, telles qu'une instruction de passage de l'une à l'autre de la première et deuxième possibilité.

*Septième possibilité :*

Selon une septième possibilité de l'invention illustrée sur la figure 7, le circuit d'alimentation 350 peut être conformé pour alimenter la zone source 111 et la première électrode de grille 121 ensemble, la zone de drain 112, et la deuxième électrode de grille 125 étant alimentées indépendamment l'une de l'autre et du couple zone source 111/ première électrode de grille, et pour former la couche de blocage 114 au niveau de la première face de la couche de canal 113. De plus, conformément aux troisième et quatrième possibilités déjà décrites pour autoriser une telle polarisation, selon cette septième possibilité, la structure de détection 100 présente une « pré-polarisation » de la couche de blocage 114 fournie par :

- soit, une première couche de diélectrique de grille 121 comprenant une première et une deuxième sous-couche de respectivement un premier et un deuxième matériau diélectrique aptes à former ensemble une interface dipolaire par la création d'un dipôle électrostatique entre eux,
- soit, un sur-dopage d'une portion de la zone de canal 113 destinée à la couche de blocage 114 en éléments dopants accepteurs d'électrons, tels que des atomes de bore ou d'indium obtenus par implantation ionique d'ions de Bore B, d'ions de fluorure de Bore BF2 ou d'ions d'indium In.

Ainsi, avec une telle interface dipolaire de la première couche d'oxyde 121 ou un tel sur-dopage de la portion de la zone de canal 113 destinée à la formation de la couche de blocage 114, tous deux équivalents à une pré-polarisation de la zone de canal 113 au niveau de sa première face, il est possible d'avoir un décalage de la tension de seuil de la première électrode grille de +1 V, voir si on combine ces deux possibilités, un décalage de la tension de seuil de la première électrode grille 121 de +2 V. Il en résulte avec une telle « pré-polarisation » au niveau de la première électrode de grille 121, qu'il n'est pas nécessaire d'appliquer une tension négative pour former la couche de blocage comme cela est le cas dans le cadre de la sixième possibilité.

Selon cette septième possibilité de l'invention et avec la configuration exemplaire décrite dans la partie « principe de l'invention », le circuit d'alimentation 350 peut être configuré pour appliquer en fonctionnement :

- une tension source Vs et de grille Vg nulle, 0V, appliquée à la zone source 111 et à la première électrode de grille 121,
- une tension drain Vd de 200 mv à la zone de drain 112, et
- une tension de grille arrière Vb positive comprise entre 150 mV et 2,5 V à la deuxième électrode de grille 125, cette tension de grille arrière Vb devant être adaptée en fonction de l'épaisseur de la deuxième couche de diélectrique de grille 135 et du courant de fonctionnement du transistor.

Une telle septième possibilité présente l'avantage que, comme la zone source 111 et la première électrode de grille 121 sont court-circuitées, il n'est nécessaire de prévoir que trois interconnexions entre la structure de détection 100 et le circuit d'alimentation 350. De cette manière, on limite les échanges thermiques entre la structure de détection et le circuit d'alimentation 350 qui peuvent réduire la température atteinte par l'absorbeur et par conséquent la sensibilité du composant de détection 1.

*Huitième possibilité :*

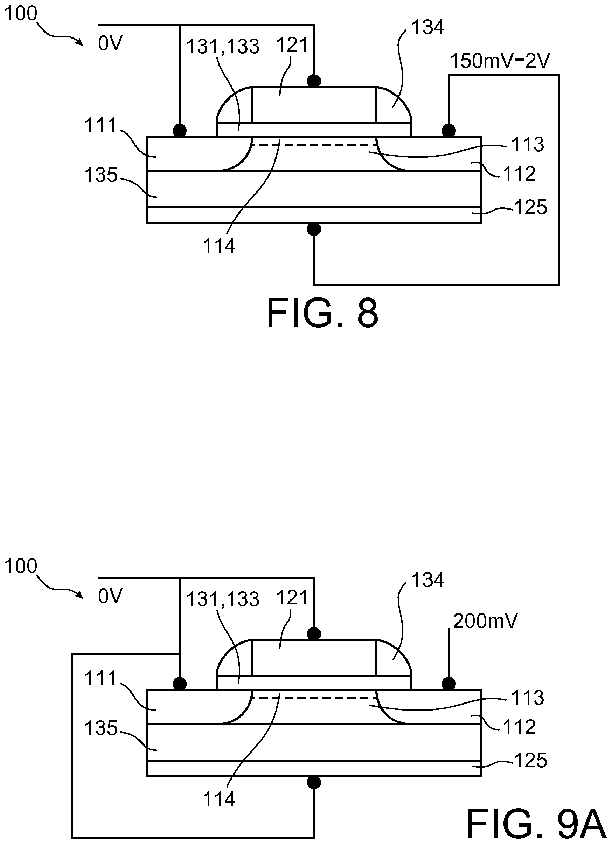

Selon une huitième possibilité de l'invention illustrée sur la figure 8, le circuit d'alimentation 350 peut être conformé pour alimenter la zone source 111 et la première électrode de grille 121 ensemble, pour alimenter la zone de drain 112 et la deuxième électrode de grille 125 ensemble, et pour former la couche de blocage 114 au niveau de la première face de la couche de canal 113. De plus, pour autoriser une telle polarisation, selon cette huitième possibilité, la structure de détection 100 présente une « pré-polarisation » de la couche de blocage 114 similaire à celle décrite dans le cadre des troisième, quatrième et septième possibilités.

Conformément à cette huitième possibilité, afin de réduire au minimum la tension de polarisation de la deuxième électrode de grille 125 et donc la tension appliquée à la zone de drain 112, l'épaisseur de la deuxième couche de diélectrique de grille 131 est choisie comme relativement faible, celle-ci pouvant être comprise entre 20 nm et 50 nm et préférentiellement entre 25 et 35 nm, voire sensiblement égale à 30 nm. En complément, la tension de polarisation de la deuxième électrode de grille 125 et donc de la tension appliquée à la zone de drain 112 peut également être réduite par une optimisation du rapport largeur de la zone de canal/ sur la longueur de la zone de canal, ce rapport étant préférentiellement supérieur à 150, voire 250, voire encore à 300.

Selon cette huitième possibilité de l'invention et avec la configuration exemplaire décrite dans la partie « principe de l'invention », le circuit d'alimentation 350 peut être configuré pour appliquer en fonctionnement :

- une tension source Vs et de grille Vg nulle, 0 V, appliquée à la zone source 111 et à la première électrode de grille 121,
- une tension drain Vd et de de grille arrière Vb comprise entre 150 mV et 2 V appliquée à la zone de drain 112 et à la deuxième électrode de grille 125, cette tension devant être adaptée en fonction de l'épaisseur de la deuxième couche de diélectrique de grille 135 et du courant de fonctionnement du transistor.

*Neuvième possibilité :*

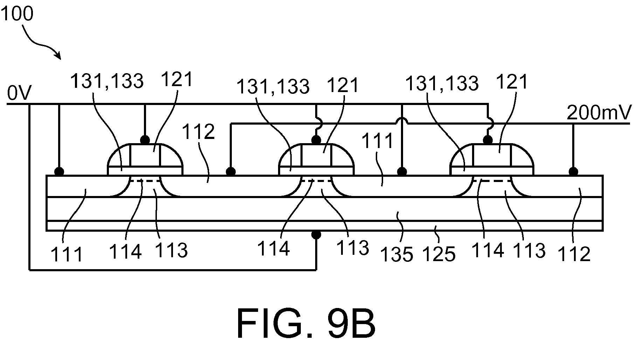

Selon une neuvième possibilité de l'invention illustrée sur les figures 9A et 9B, le circuit d'alimentation 350 peut être conformé pour alimenter la zone source 111, la première électrode de grille 121 et la deuxième électrode de grille 125 ensemble, pour alimenter la zone de drain 112 de manière individuelle, et pour former la couche de blocage 114 au niveau de la première face de la couche de canal 113. De plus, pour autoriser une telle polarisation, selon cette neuvième possibilité, la structure de détection 100 présente une « pré-polarisation » de la couche de blocage 114 similaire à celle décrite dans le cadre des troisième, quatrième, septième et huitième possibilités.

Conformément à cette neuvième possibilité, afin de réduire à zéro la tension de polarisation de la deuxième électrode de grille 125, l'épaisseur de la deuxième couche de diélectrique de grille 131 est choisie comme relativement faible, celle-ci pouvant être comprise entre 20 nm et 50 nm et préférentiellement entre 25 et 35 nm, voire sensiblement égale à 30 nm. En complément, la tension de polarisation de la deuxième électrode de grille 125 peut également être réduite à zéro par une optimisation du rapport largeur de la zone de canal/ sur la longueur de la zone de canal, ce rapport étant préférentiellement supérieur à 150, voire 250, voire encore à 300.

Selon cette neuvième possibilité de l'invention et avec la configuration exemplaire décrite dans la partie « principe de l'invention », le circuit d'alimentation 350 peut être configuré pour appliquer en fonctionnement :

- une tension source Vs, de grille Vg et de grille arrière nulle, 0 V, appliquée à la zone source 111, à la première électrode de grille 121 et à la deuxième grille 125,
- une tension drain Vd typiquement égale à 200 mV.

Une telle neuvième possibilité présente l'avantage que, comme la zone source 111 la première électrode de grille 121 et la deuxième électrode de grille 125 sont court-circuitées et que la zone de drain 112 est indépendante, il n'est nécessaire de prévoir que deux interconnexions entre la structure de détection 100 et le circuit d'alimentation 350. De cette manière, on limite les échanges thermiques entre la structure de détection et le circuit d'alimentation 350 qui peuvent réduire la température atteinte par l'absorbeur et par conséquent la sensibilité du composant de détection 1.

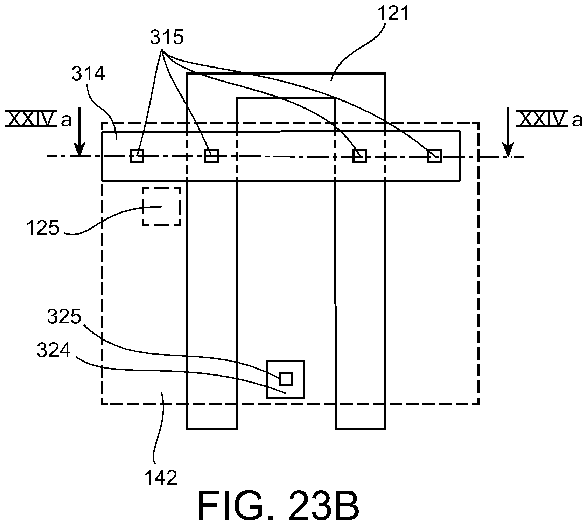

La figure 9B illustre une configuration particulière de la structure de détection 100 selon cette neuvième possibilité dans laquelle la structure de détection 100 présente un rapport largeur de la zone de canal/ sur la longueur de la zone de canal optimisé. Une telle optimisation est ici obtenue par une configuration en « triple--transistor », ou « en peigne à trois dents » (ce conférer à la figure 23B qui illustre un exemple à grille double ou « en peigne à deux dents »), la structure comprenant une zone source 111 et une zone de drain 112 dédoublées et une zone de canal triplée. En effet, comme le montre la figure 9B, la structure de détection est formée par la succession d'une « première » zone source 111, d'une « première » zone de canal 113, d'une « première » zone de drain 112, d'une « deuxième » zone de canal 113, d'une « deuxième » zone source 111, d'une « troisième » zone de canal 113 et d'une « deuxième » zone de drain 112.

De la même façon que pour la quatrième possibilité, l'homme du métier est à même généraliser une telle configuration et d'utiliser une configuration à grille multiples où en « peigne à multiple dents » avec un nombre quelconque de grilles/dents, le nombre de grilles ou de « dents » étant supérieur ou égale à 2.

Afin d'illustrer ces différentes possibilités de l'invention, des modes de réalisation pratiques de l'invention sont décrits ci-après.

*Premier mode de réalisation*

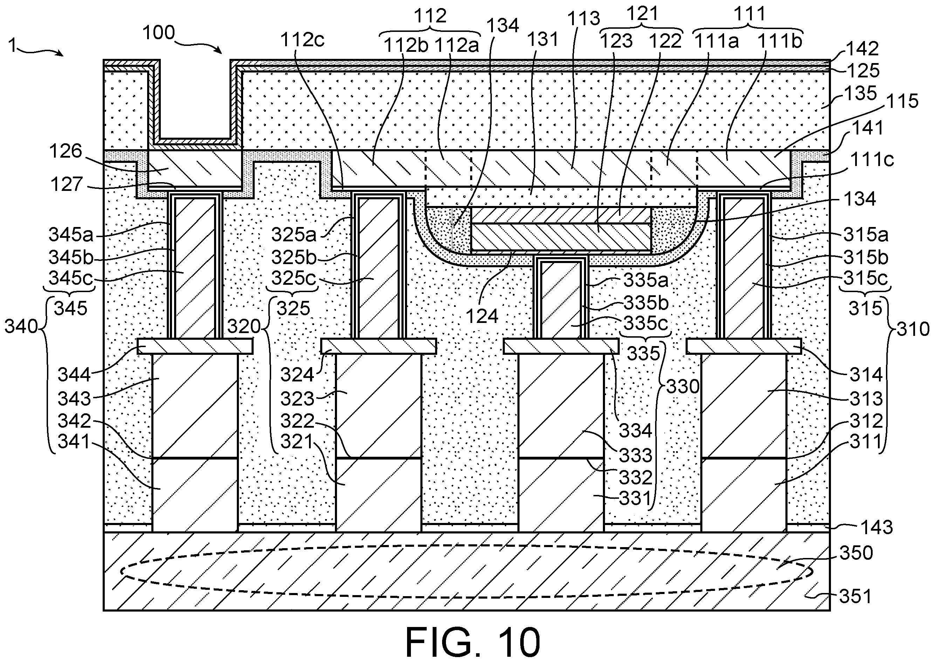

La figure 10 illustre ainsi un premier mode de réalisation de l'invention conforme aux première et deuxième possibilités de l'invention.

Ainsi, selon ce premier mode de réalisation et comme illustré sur la figure 10, le composant de détection 1 comporte :

-    la structure détection 100, dans laquelle la deuxième électrode de grille 125 forme une partie de l'élément d'absorption,
-    un premier, un deuxième, un troisième et un quatrième bras de connexion 310, 320, 330, 340 pour connecter le circuit d'alimentation 350 à respectivement la zone source 111, la zone de drain 112, la première électrode de grille 121 et la deuxième électrode de grille,
-    un substrat de lecture 351 dans lequel est aménagé au moins en partie le circuit d'alimentation 350, le circuit d'alimentation 350 formant, dans le présent mode de réalisation, de circuit de lecture du composant de détection 1.

Plus spécifiquement, la structure de détection 100 comprend :

-    la deuxième couche d'oxyde 135,
-    une première couche semiconductrice 115 dans laquelle sont aménagées les zones source 111, de drain 112 et de canal 113 et une zone de connexion 126 pour la deuxième électrode de grille 125, la première couche semiconductrice 115 est agencée en contact de la deuxième couche d'oxyde 125,
-    la première couche d'oxyde 131 comprenant, selon ce premier mode de réalisation, une couche de dioxyde de silicium, la première couche d'oxyde 131 étant disposée en contact de la première couche semiconductrice 115 sur une face de la couche semiconductrice 115 opposée à la deuxième couche d'oxyde 135 la première couche d'oxyde étant disposée en regard de la zone de canal 113 et d'une première partie 111a, 112a de chacune de la zone source 111 et de la zone de drain 112,
-    la première électrode de grille 121 comprenant une première couche conductrice 122, telle qu'une couche de nitrure de titane TiN, en contact de la première couche d'oxyde grille, et une deuxième couche en polysilicium dopé pSi 123,
-    un premier et deuxième éléments espaceur 134 disposés de part et d'autre de la première électrode de grille 121 en recouvrant le reste de la première couche d'oxyde 131 qui n'est pas recouverte par la première électrode de grille,
-    la deuxième électrode de grille 125 recouvrant la deuxième couche de diélectrique de grille 135 sur une face de la deuxième couche de diélectrique de grille 135 qui est opposée à la premier couche semiconductrice 115,
-    une première, une deuxième et une troisième couche d'arrêt 141, 142, 143 optionnelles, telles que des

couches d'alumine Al$_2$O$_3$ ou de nitrure d'aluminium AIN, conformées pour protéger le reste de la structure lors d'une attaque chimique, telle qu'une gravure à l'acide fluorhydrique lors du procédé de fabrication.

Plus précisément, la deuxième couche de diélectrique de grille 135 est une couche de dioxyde de silicium SiO$_2$ telle qu'une couche d'oxyde enterrée d'un substrat du type semiconducteur sur oxyde connu sous le sigle anglais SOI utilisé ci-après. La deuxième couche de diélectrique de grille 125 présente une épaisseur comprise entre 10 et 150 nm, voire entre 50 et 100 nm et avantageusement entre 60 et 80 nm. Typiquement, la deuxième couche de diélectrique de grille peut ainsi présenter une épaisseur sensiblement égale à 70 nm. Une telle épaisseur peut être fournie par une étape d'amincissement d'une couche d'oxyde enterrée d'un substrat SOI.

La premier couche semiconductrice 115 peut être une couche de silicium Si issue d'un substrat SOI, d'une épaisseur inférieure ou égale à 100 nm, telle qu'une épaisseur de 70 nm. La première couche semiconductrice peut également présenter une épaisseur inférieure à 50 nm voire sensiblement égale à 30 nm ceci au moyen d'une étape préalable d'amincissement de la première couche semiconductrice 115. Une telle étape peut être réalisée, par exemple, par oxydation thermique de la première couche semiconductrice 115.

Les zones source 111, de drain 112 et de canal 113 sont aménagées dans la première couche semiconductrice 115. La zone source 111 et la zone de drain 112 sont d'un premier type de conductivité pour lequel les porteurs majoritaires sont des électrons, autrement dit, sont dopées N. Chacune de la zone source 111 et de la zone de drain 112 présentent une première partie 111a, 112a relativement faiblement dopée et une deuxième partie 111b, 112b relativement fortement dopée afin de favoriser la prise de contact. La première partie 111a, 112a de la zone source 111 et de la zone drain peuvent ainsi présenter une concentration en porteurs majoritaires du premier type de conductivité comprise entre 5.10$^{16}$ cm$^{-3}$ et 1.10$^{18}$ cm$^{-3}$, préférentiellement entre 1.10$^{17}$ cm$^{-3}$ et 5.10$^{17}$ cm$^{-3}$. De la même façon, la deuxième partie 111b, 112b de la zone source 111 et de la zone drain 112 peuvent présenter une concentration en porteurs majoritaires du premier type de conductivité comprise entre 5.10$^{19}$ cm$^{-3}$ et 5.10$^{10}$ cm$^{-3}$, préférentiellement entre 1.10$^{20}$ cm$^{-3}$ et 2.10$^{20}$ cm$^{-3}$.

La zone de canal 113 présente le deuxième type de conductivité, c'est-à-dire ici dopée P, avec une concentration en porteurs majoritaires du deuxième type de conductivité inférieure à 1.10$^{16}$ cm$^{-3}$, celle-ci étant préférentiellement inférieure à 5.10$^{15}$ cm$^{-3}$. Ainsi la zone de canal 113 peut présenter une concentration sensiblement égale à 1.10$^{15}$ cm$^{-3}$. En variante, la zone de canal 113 peut présenter un dopage intrinsèque.

La première couche semiconductrice 115 comprend également une portion isolée électriquement des zones source 111, de drain 112 et de canal 113. La portion isolée électriquement forme une zone de connexion 126 de la deuxième électrode de grille 125. Ladite portion isolée électriquement présente une concentration en porteurs majoritaires préférentiellement supérieure à $1.10^{19}$ cm$^{-3}$, voire à $1.10^{20}$ cm$^{-3}$ de manière à présenter une résistivité réduite. La zone de connexion est préférentiellement dégénérée.

Afin de favoriser la prise de contact, chacune de la zone de connexion 126 et des deuxièmes parties 111b, 112b de la zone source 111 et de la zone de drain 112 peut être munie chacune, sur une face qui est opposée à la deuxième couche de diélectrique de grille 135, d'une interface comprenant un siliciure, telle qu'une interface 111c, 112c, 127 en siliciure de nickel SiNiz.

Ainsi, dans ce premier mode de réalisation, les deuxièmes parties 111b, 112b de la zone source 111 et de la zone de drain 112 et la zone de connexion 126 sont en contact, par leur interface respective comprenant un siliciure, avec respectivement, le premier bras de connexion 310, le deuxième bras de connexion 320 et le quatrième bras de connexion 340.

La zone de canal 113 et les premières parties 111a, 112a de la zone source 111 et de la zone de drain 112 sont recouvertes par la première couche d'oxyde grille 131. La première couche d'oxyde est réalisée en dioxyde de silicium et présente une épaisseur comprise entre 5 et 15 nm.

Selon une variante de ce premier mode de réalisation non illustrée, la première couche de diélectrique de grille 131 peut comporter une première sous-couche de diélectrique de grille réalisée en dioxyde de silicium, en contact de la zone de canal 113, et une deuxième sous-couche de diélectrique de grille réalisée dans un « isolant diélectrique à haute constante diélectrique », plus connue sous la dénomination diélectrique « high-K », tel qu'un dioxyde d'hafnium $HfO_2$, ladite deuxième sous-couche étant agencée entre la première sous-couche de diélectrique de grille et la première couche conductrice 122. Selon cette variante, la première sous-couche de diélectrique de grille peut avoir une épaisseur comprise entre 5 et 15 nm tandis que la deuxième couche de diélectrique de grille présente une épaisseur comprise entre 1 et 5 nm, telle qu'une épaisseur de 3 nm.

Il doit être entendu ci-dessus et dans le reste de ce document, par « isolant diélectrique à haute constante diélectrique », ou, selon la dénomination anglaise généralement employée par l'homme du métier, par matériau diélectrique « high-K », un matériau isolant dont la constante diélectrique est élevée par rapport à celle du dioxyde de silicium qui est égale à 3,9. Ainsi, un matériau diélectrique pourra être considéré comme un matériau à haute constante diélectrique s'il présente une constante diélectrique supérieure ou égale à au moins 1,5 fois, voire 2 à 3 fois, celle du dioxyde de silicium.

L'électrode de grille 121 comprend la première couche conductrice 122 et la deuxième couche conductrice 123.

La première couche conductrice 122 est préférentiellement réalisée dans un matériau conducteur du type « milieu-de-gap » pour la zone de canal 113, la première couche conductrice 122 étant préférentiellement dans un matériau conducteur choisi dans le groupe comportant les nitrures de titane TiN, les nitrures de tantale TaN et les siliciures de molybdène $MoSi_2$ pour une zone de canal 113 réalisé en silicium, la première couche conductrice 122 étant avantageusement réalisée dans un nitrure de titane TiN pour une zone de canal 113 réalisée en silicium.

En prenant en compte la configuration de la première couche conductrice 122 de l'électrode de grille 121, de manière à favoriser les capacités d'absorption de la première couche conductrice 122 de l'électrode de grille 121, la première couche conductrice 122 et la première couche d'oxyde grille 131 qui la supporte peuvent être choisies de manière à respecter les inégalités suivantes :

$$(1) 150\Omega \leq \frac{\rho}{Ep} \leq 700\ \Omega$$

avec ρ la résistivité équivalente de la première couche conductrice d'électrode de grille 121 et Ep étant l'épaisseur de la première couche conductrice 122 de la première électrode de grille 121. On notera, que de manière encore plus préférentielle $\rho/E_p$ est choisi proche, voire égale à 376,9 Ω.

Ainsi la première couche conductrice 122 peut être réalisée en nitrure de titane TiN et présenter une épaisseur comprise entre 5 et 15 nm, voir sensiblement égale à 10 nm.

La deuxième couche conductrice 123 peut être réalisée dans un polysilicium pSi dopé d'une épaisseur comprise entre 50 nm et 100 nm.

D'une manière à favoriser la prise de contact avec le troisième bras de connexion 330, la deuxième couche conductrice 123 peut présenter, sur une face opposée à la première couche conductrice 121, une interface comprenant un siliciure, telle qu'une interface 124 en siliciure de nickel $SiNi_2$.

Ainsi, dans ce premier mode de réalisation, la deuxième couche conductrice 123 est en contact, par son interface comprenant un siliciure, avec le troisième bras de connexion.

La première électrode de grille 121 est prolongée, en contact de respectivement de la première partie 111a, 112a de la zone source 111 et de la zone de drain 112, par un élément espaceur 134 réalisé dans un matériau diélectrique tel qu'un nitrure de silicium $Si_3N_4$.

Comme le montre la figure 10, les portions de la zone de connexion 126, des deuxième parties 111b, 112b de la zone source 111 et de la zone de drain 112, les flancs de la première couche de diélectrique de grille 131, la partie de la deuxième couche conductrice 123 qui ne sont pas en contact avec l'un des premier, deuxième, troisième et quatrième bras de connexion 310, 320, 330, 340, les éléments espaceur 134 et les parties de la deuxième grille 135 qui ne sont pas en contact avec la première couche semiconductrice 115, sont recouvertes par la première couche d'arrêt 141.

La deuxième couche de diélectrique de grille 135 est en contact, sur sa face opposée à la première couche semiconductrice 115, avec la deuxième électrode de grille 125. La deuxième électrode de grille 125, de la même manière que la première couche conductrice 122, est préférentiellement réalisée dans un matériau conducteur du type « milieu-de-gap » pour la zone de canal 113, la deuxième électrode de grille 125 étant préférentiellement dans un matériau conducteur choisi dans le groupe comportant les nitrures de titane TiN, les nitrures de tantale TaN et les siliciures de molybdène $MoSi_2$ pour une zone de canal 113 réalisée en silicium, la première couche conductrice 122 étant avantageusement réalisée dans un nitrure de titane TiN pour une zone de canal 113 réalisée en silicium.

En prenant en compte la configuration de la deuxième électrode de grille 125, de manière à favoriser les capacités d'absorption de la deuxième électrode de grille, l'électrode de grille et la deuxième couche d'oxyde grille qui la supporte peuvent être choisies de manière à respecter les inégalités suivantes :

$$(1) 150\Omega \leq \frac{\rho}{Ep} \leq 700\,\Omega$$

avec $\rho$ la résistivité équivalente de la deuxième électrode de grille 125 et Ep étant l'épaisseur de la deuxième électrode de grille 125. On notera, que de manière encore plus préférentielle $\rho/E_p$ est choisi proche, voire égale à 376,9 $\Omega$.

Ainsi la deuxième électrode de grille 125 peut être réalisé en nitrure de titane TiN et présenter une épaisseur comprise entre 5 et 15 nm, voir sensiblement égale à 10 nm.

La deuxième électrode de grille 125 est recouverte, sur sa face opposée à la deuxième couche de diélectrique de grille 135, par la deuxième couche d'arrêt 142.

Comme illustré sur la figure 10, les premier, deuxième, troisième et quatrième bras de connexion 310, 320, 330, 340 permettent de connecter la structure de détection au circuit d'alimentation 350 tout en l'isolant thermiquement du substrat de lecture 351 comprenant ledit circuit d'alimentation 350.

Chacun du premier, deuxième, troisième et quatrième bras de connexion 310, 320, 330, 340 comprend :

- une première partie de contact 315, 325, 335, 345 pour contacter électriquement respectivement la zone source 111, la zone de drain 112, la première électrode de grille 121 et la zone de connexion 126,

- une deuxième partie d'isolation thermique 314, 324, 334, 344, figurée par une simple couche mince ou un ensemble de couches minces, ladite partie d'isolation étant conforme au bras d'isolation tel qu'enseigné par le document US 16/334109, la deuxième partie permettant une isolation thermique entre la première partie de contact 315, 325, 335, 345 et une troisième partie de collage 313, 323, 333, 343,

- la troisième partie de collage 313, 323, 333, 343 adaptée pour permettre une collage avec une quatrième partie de collage 311, 321, 331, 341 d'un support de lecture 351,

- la quatrième partie de collage 311, 321, 331, 341 adaptée pour permettre un collage avec la troisième partie et connectée au circuit d'alimentation 350.

Chaque première partie de contact 315, 325, 335, 345 des bras de connexion 310, 320, 330, 340 comprend :

- un corps en tungstène W 315a, 325a, 335a, 345a,
- un premier revêtement conducteur 315b, 325b, 335b, 345b, en nitrure de titane TiN recouvrant le corps de tungstène,
- un deuxième revêtement conducteur 315c, 325c, 335c, 345c en titane Ti recouvrant le premier revêtement conducteur 315b, 325b, 335b, 345b,

Le premier revêtement conducteur 315b, 325b, 335b, 345b et le deuxième revêtement conducteur 315c, 325c, 335c, 345c peuvent présenter une épaisseur respective comprise entre 30 et 90 nm, préférentiellement sensiblement égale à 60 nm et entre 20 et 40 nm, préférentiellement sensiblement égale à 30 nm.

Chaque deuxième partie d'isolation thermique 314, 324, 334, 344 comprend :

- une première couche de rigidification, non représentée, en regard de la deuxième couche de diélectrique de grille 135,
- une piste de conduction, non représentée, correspondante en contact avec la première couche de rigidification sur la face de la première couche de rigidification 312, 322 qui est opposée à la deuxième couche de diélectrique de grille 135,
- une deuxième couche de rigidification, non représentée, en contact avec la piste de conduction correspondante sur la face de la piste de conduction correspondante qui est opposée à la première couche de rigidification.

La première piste de conduction de chaque deuxième partie d'isolation thermique 314, 324, 334, 344 est en contact électrique avec chacune de la première partie de connexion 315, 325, 335, 345 et de la troisième partie de collage 313, 323, 333, 343. La première piste de conduction de chaque deuxième partie de d'isolation thermique 314, 324, 334, 344 à l'une de ses extrémités à la première partie de connexion 315, 325, 335, 345 correspondante et pour son autre extrémités à la troisième partie de collage 313, 323, 333, 343 correspondante.

Afin d'offrir une fonction d'isolation thermique, la deuxième partie d'isolation thermique 314, 324, 334, 344 peut s'étendre dans un plan sensiblement parallèle au plan de la première couche semiconductrice 115 sous la forme d'un serpentin.

Chaque troisième partie de contact 313, 323, 333, 343 est réalisée dans un matériau adapté pour permettre un collage moléculaire avec la quatrième partie de contact 311, 321, 331, 341. Ainsi par exemple chaque troisième partie de contact 313, 323, 333, 343 peut être, par exemple réalisée en cuivre, ceci afin d'autoriser un collage moléculaire mixte cuivre/matériau sacrificielle sur cuivre/matériau sacrificielle. Comme montré sur la figure 10, chaque troisième partie de collage 313, 323, 333, 343 peut présenter la forme d'un plot tubulaire.

D'une manière identique, chaque quatrième partie de collage 311, 321, 331, 341 peut être réalisée dans le même matériau que la troisième partie de collage 313, 323, 333, 343, de manière à autoriser un collage moléculaire entre elles. Ainsi, chacune des quatrièmes parties de contact 313, 323, 333, 343 peut être, par exemple réalisée en cuivre. Comme montré sur la figure 10. De plus, chaque quatrième partie de collage 311, 321, 331, 344 peut présenter la forme d'un plot tubulaire avec une configuration complémentaire à la troisième partie de collage complémentaire.

On notera que, à titre d'illustration et pour permettre une meilleure compréhension du principe d'assemblage utilisé dans le cadre de ce présent mode de réalisation, l'interface de collage moléculaire 312, 322, 332, 342 entre les quatrièmes parties de collage 313, 323, 333, 343 et les troisièmes parties de collage 311, 321, 331, 341 est figurée. Bien entendu, selon le principe du collage moléculaire, une telle interface n'est plus présente sur le dispositif de détection 1.

Bien entendu, une telle configuration des bras de connexion n'est fournie qu'à titre d'exemple, d'autres configurations étant parfaitement envisageables sans que l'on sorte du cadre de l'invention. On notera, en particulier et variante non illustré, qu'il est envisageable que le composant de détection selon ce premier mode de réalisation comporte seulement trois bras de connexion, voire deux bras de connexion, au moins l'un de ces deux, voire trois bras comportant plusieurs pistes de connexion afin de permettre la connexion des zones source 111 et de drain 112 et des première et deuxième électrodes de grille 121, 125.

Les quatrièmes parties de collage 311, 321, 331, 341 des bras de connexion 310, 320, 330, 340 sont en contact avec respectivement une première, deuxième, troisième et quatrième zone de connexion d'alimentation du circuit d'alimentation 350 qui affleurent une surface substrat de lecture 351.

Dans le présent mode de réalisation, le substrat de lecture 351 est un substrat silicium dans lequel est aménagé le circuit d'alimentation 350. Le circuit d'alimentation est, dans le cadre du présent mode de réalisation, un circuit de lecture adapté pour alimenter la structure de détection en conformité avec au moins l'une de la première et de la de deuxième possibilité de l'invention. Conformément à la variante aux premier et deuxième possibilités de l'invention, le circuit d'alimentation peut également être adapté pour alimenter la structure de détection selon la première possibilité et selon la deuxième possibilité, le circuit d'alimentation 350 pouvant être commandé pour passer de l'une à l'autre ou configuré pour passer de l'une à l'autre en fonction de certaines conditions.

On notera que, conformément au procédé de fabrication d'un tel composant de détection 1 décrit ci-après, le substrat de lecture 351 peut présenter, sur la surface sur laquelle affleure les première, deuxième, troisième et quatrième zones de connexion d'alimentation du circuit d'alimentation 350, une troisième couche d'arrêt 143 recouvrant les parties de ladite surface qui ne sont pas en contact avec les bras de connexion 310, 320, 330, 340. Ladite troisième couche d'arrêt 143, telle qu'une couche d'alumine $Al_2O_3$ ou de nitrure d'aluminium AIN, est conformée pour protéger le substrat de lecture 351 lors d'une attaque chimique, telle qu'une gravure à l'acide fluorhydrique.

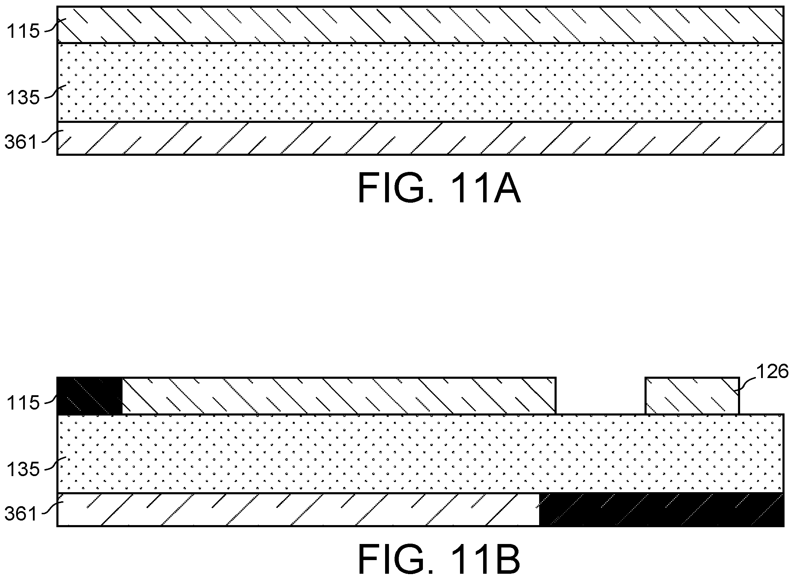

Un tel composant de détection 1 peut être fabriqué à partir d'un procédé de fabrication dont les principales étapes sont illustrées sur les figures 11A à 11H et qui comporte trois phases :

- une première phase de fabrication d'un support de détection 101 destiné à la fabrication de la structure de détection 100,
- une deuxième phase de fabrication du support de lecture 352, et
- une troisième phase d'assemblage du support de détection 100 avec le support de lecture 352 ceci pour former le composant de détection 1.

La première phase de fabrication de la structure de détection 100 comprend les étapes suivantes :

- fourniture d'un substrat SOI comprenant un substrat semiconducteur 361, une couche d'oxyde destinée à former la deuxième couche de diélectrique de grille 135 et une première couche semiconductrice 115, la première couche semiconductrice 115 présentant le deuxième type de conductivité avec une concentration en porteurs majoritaire de la zone de canal 113, tel qu'illustré sur la figure 11A,
- amincissement éventuelle de la première couche semiconductrice 115, par exemple par l'intermédiaire d'une oxydation thermique et d'une gravure dudit oxyde thermique,

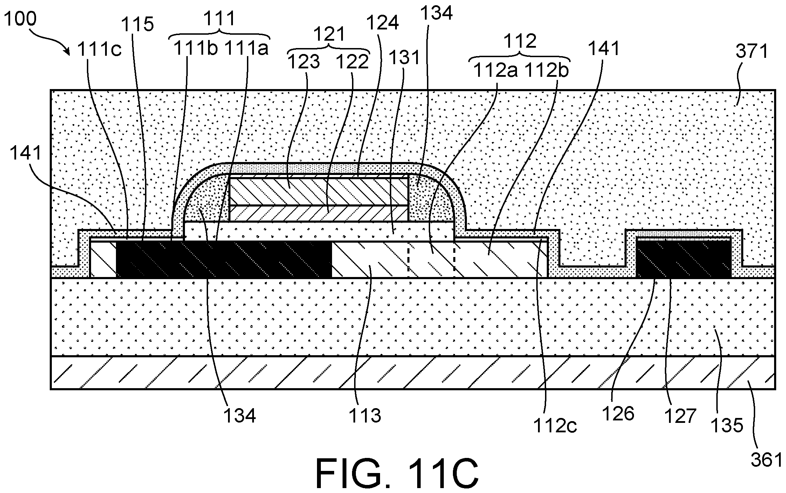

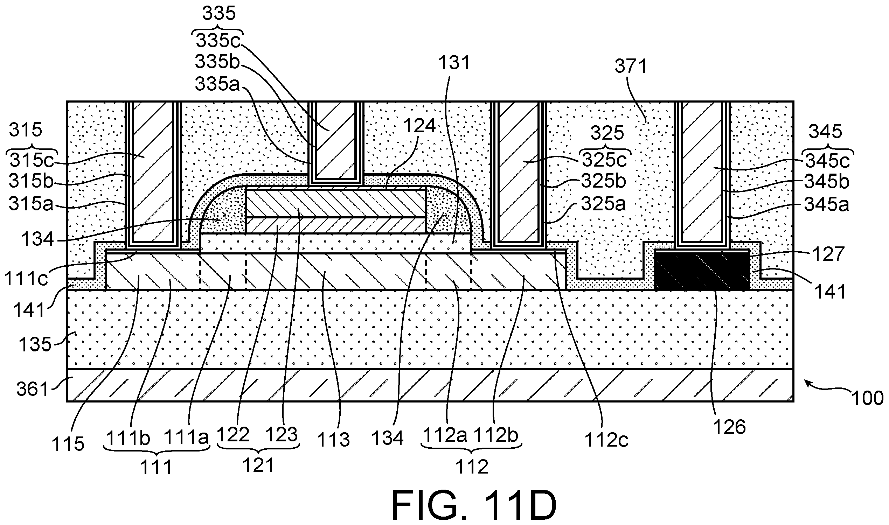

- gravure localisée de la première couche semiconductrice 115 afin de conserver les parties de la première couche semiconductrice 115 destinée à former la zone de connexion 126 et les zones source 111, de drain 112, et de canal 113, comme illustré sur la figure 11B,
- oxydation thermique de la couche semiconductrice 115, de manière à former la première couche de diélectrique de grille 131,
- dépôt successif de la première couche conductrice 122 en contact avec la première couche de diélectrique de grille 131 et de la deuxième couche conductrice 123 en contact de la première couche conductrice 122, cette étape de dépôt étant suivie d'une étape de gravure localisée de manière à former la première électrode de grille 121 en regard de la zone de canal 113 ,
- implantation d'éléments dopants du premier type de conductivité dans les parties de la couche semiconductrice 115 correspondant à la zone source 111, la zone de drain 112 et la zone de connexion 126, la zone de canal 113 étant protégée par la première électrode de grille 121, les premières parties 111a, 112a de la zone source 111 et de la zone de drain étant ainsi formées,
- dépôt localisé des éléments espaceur 134 dans le prolongement de la première électrode de grille 121 en regard de respectivement les premières parties 111a, 112a de la zone source 111 et de la zone de drain 112,
- implantation supplémentaire d'éléments dopants du premier type de conductivité dans les parties de la couche semiconductrice 115 correspondant aux deuxièmes parties 111b, 112b de la zone source 111 et de la zone de drain 112 et à la zone de connexion 126, la zone de canal 113 et les première parties 111a, 112b de la zone source 111 et de la zone de drain 112 étant protégées par la première électrode de grille 121 et les éléments espaceur 134,
- recuit thermique d'activation, tel qu'un recuit thermique sous azote, afin d'activer et faire diffuser les éléments dopants implantés dans les zones source 111, de drain 112 et de connexion 126, ledit recuit du type «recuit thermique rapide » de 1 à 15 s classiquement connu par l'homme du métier sous la dénomination anglaise « Rapid Themal Anneal »,
- formation d'une interface 124, 111c, 112c, 127 respective comprenant un siliciure en contact de respectivement de la première électrode de grille 121, des deuxième parties de la zone source 111 et de la zone de drain et de la zone de connexion 126, ces interfaces étant formée par dépôt de nickel ou de titane et d'un recuit du type « procédé de recuit rapide classiquement connu par l'homme du métier sous la dénomination « Rapid thermal Process »,
- dépôt de la première couche d'arrêt 141 en contact de la zone de connexion 126, des deuxième parties 111b, 112b de la zone source 111 et de la zone de drain 112, les flancs de la première couche de diélectrique de grille 131, la deuxième couche conductrice 123, les éléments espaceurs 134 et la deuxième couche de diélectrique de grille 135,
- dépôt d'une couche d'un matériau sacrificiel 371, tel que du dioxyde de silicium, de manière à recouvrir l'ensemble formé par la première couche semiconductrice 115, la première couche de diélectrique de grille 131, la première électrode de grille 121, la couche d'arrêt 141, comme illustré sur la figure 11C,
- planarisation de la couche de matériau sacrificiel 371,
- gravure localisée de la couche de matériau sacrificiel 371 de manière à former une ouverte respective correspondant à la première partie 315, 325, 335, 345 de respectivement du premier, deuxième, troisième et quatrième bras de connexion 310, 320, 330, 340, lesdites ouvertures débouchant sur la première d'arrêt en regard de respectivement les deuxièmes parties 111b, 112b des zones source 111 et de drain 112, de la première électrode de grille 121 et de la zone de connexion 126,
- gravure des portions de la première couche d'arrêt libérées de la couche de matériau sacrificiel 371,
  dépôt d'une couche de titane Ti au travers des ouvertures ménagées dans la couche de matériau sacrificiel de manière à former le deuxième revêtement conducteur 315c, 325c, 335c, 345c en titane Ti de chacune des premières parties de connexion des premier, deuxième, troisième et quatrième bras de connexion 310, 320, 330, 340,
- dépôt d'une couche de nitrure de titane TiN au travers des ouvertures ménagées dans la couche de matériau sacrificiel et en contact du deuxième revêtement conducteur 315c, 325c, 335c, 345c en titane Ti de manière à former le premier revêtement conducteur 315b, 325b, 335b, 345b en nitrure de titane TiN de chacune des premières parties de connexion des premier, deuxième, troisième et quatrième bras de connexion 310, 320, 330, 340,
- remplissage des ouvertures formées dans la couche de matériau sacrificiel 371 par du tungstène W de manière à former un corps en tungstène 315a, 325a, 335a, 345a de chacun du premier, deuxième, troisième et quatrième bras de connexion 310, 320, 330, 340,
- planarisation des couches de titane, de nitrure de titane et du tungstène et du matériau sacrificiel 371 de manière à supprimer les excédents des couches de titane, de nitrure de titane et du tungstène, comme illustré sur la figure 11D,
- formation des deuxième parties d'isolation thermique 314, 324, 334, 344 des bras de connexion 310, 320, 330, 340 conformément à l'enseignement du document US 16/334109,
- dépôt d'une couche supplémentaire de matériau sacrificiel 371 en contact avec la couche de matériau sacrificiel 371 et des deuxième parties d'isolation thermique 314, 324, 334, 344,

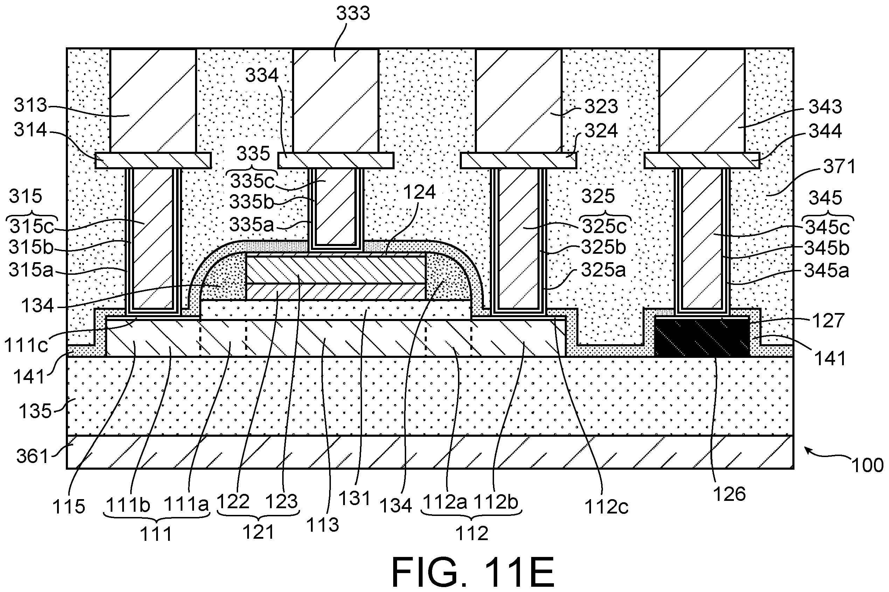

- gravure localisée de la couche de matériau sacrificiel 371 de manière à former une ouverture respective correspondant à la troisième partie de collage 313, 323, 333, 343 de chacun du premier, deuxième, troisième et quatrième bras de connexion 310, 320, 330, 340,
- remplissage des ouvertures formées dans la couche supplémentaire de matériau sacrificiel 371 par un revêtement conducteur en nitrure de titane TiN (non représenté sur la figure et usuel pour l'homme du métier) et par du cuivre Cu de manière à former la troisième partie de collage 313, 323, 333, 343 de chacun du premier, deuxième, troisième et quatrième bras de connexion 310, 320, 330, 340,
- planarisation de la couche de nitrure de titane, de la couche de cuivre et de la couche supplémentaire de matériau sacrificiel 371 de manière supprimer l'excédent de cuivre et de nitrure de titane, le support de détection 101 étant ainsi formé, comme illustré sur la figure 11E.

La deuxième phase de fabrication du support de lecture 352 peut comprendre les étapes suivantes :

- fourniture du premier substrat de lecture 351 dans lequel est aménagé le circuit d'alimentation 350, le circuit d'alimentation 350 comprenant, sur une première face du premier support de lecture 351 une première, deuxième, troisième et quatrième zone de connexion d'alimentation, non illustrées, correspondant respectivement à la zone source 111, la zone de drain 112 et la première et la deuxième électrode de grille 121, 125,
- dépôt d'une troisième couche d'arrêt 143 (Al2O3 ou AIN) en contact avec la première face du support de lecture 351,

- dépôt d'une couche de matériau sacrificiel 372 en contact avec la troisième couche d'arrêt 143,

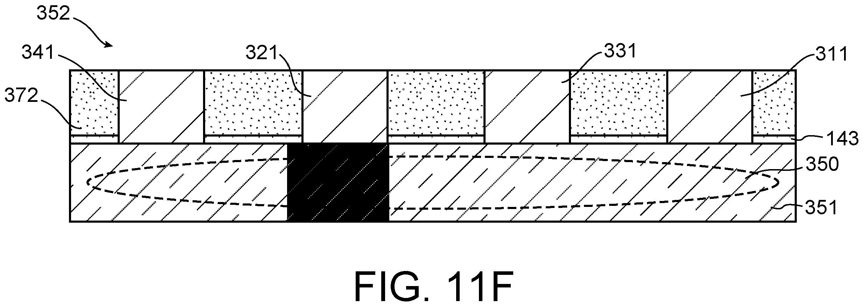

  - gravure localisée de la couche de matériau sacrificiel et de la troisième couche d'arrêt 143 pour former une première, deuxième, troisième et quatrième ouverture dans la couche de matériau sacrificiel 372, lesdites ouvertures débouchant respectivement sur la première, deuxième, troisième et quatrième zone de connexion d'alimentation,
  - remplissage de la première, deuxième et troisième et quatrième ouverture par un revêtement conducteur en nitrure de titane TiN (non représenté) et par du cuivre Cu de manière à former la quatrième partie 311, 321, 331, 341 du premier, deuxième, troisième et quatrième bras de connexion 310, 320, 330, 340,
  - planarisation de la couche de matériau sacrificiel afin de supprimer l'excédent de nitrure de titane et de cuivre, le support de lecture 352 étant ainsi formé, comme illustré sur la figure 11F.

La troisième phase d'assemblage de la structure de détection avec le substrat de lecture comprend les étapes suivantes :

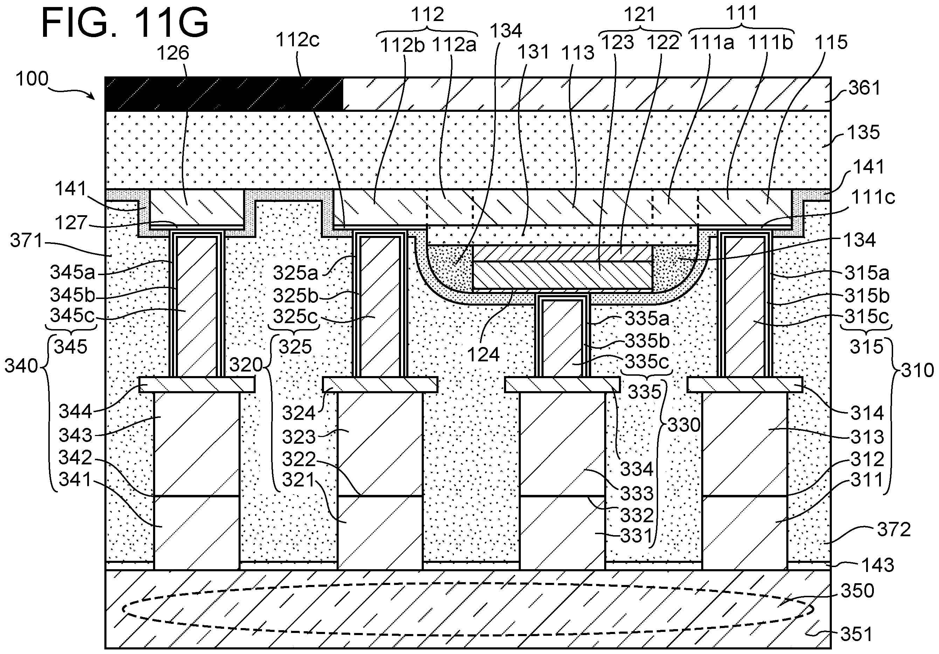

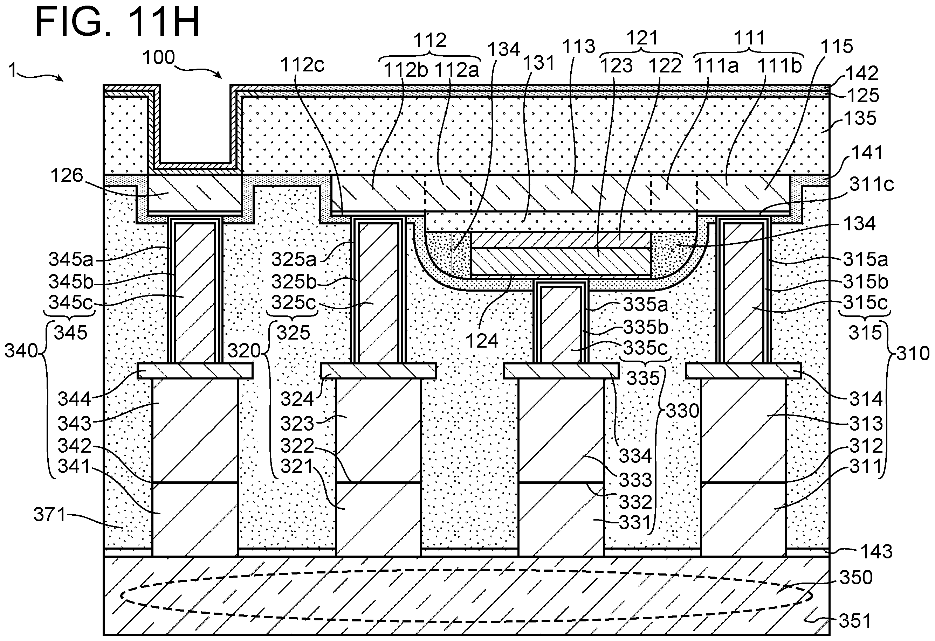

- collage du support de détection 101 avec le support de lecture 352 par un collage moléculaire mixte cuivre/cuivre et matériau sacrificiel/matériau sacrificiel en assemblant la face du support de détection comprenant les troisièmes parties de détection 313, 323, 333, 343 des bras de connexion 310, 320, 330, 340 avec la face du support de lecture 352 comprenant les quatrièmes parties de détection 312, 322, 332, 342 des bras de connexion 310, 320, 330, 340 comme illustré sur la figure 11G,
- suppression du substrat semiconducteur 361,
- gravure partielle optionnelle de la deuxième couche de diélectrique de grille 135 de manière à réduire l'épaisseur de la deuxième couche de diélectrique de grille 135,
- formation d'une ouverture dans la deuxième couche de diélectrique de grille 135 débouchant sur la zone de connexion 126,
- dépôt d'une couche de nitrure de titane TiN pour former la deuxième électrode de grille 125 en contact de la deuxième couche de diélectrique de grille 135,
- gravure localisée en périphérie de la structure de détection 100, de la deuxième électrode de grille 125 et de la deuxième couche de diélectrique de grille 135, en arrêtant la gravure sur la première couche d'arrêt,
- dépôt de la deuxième couche d'arrêt 142, comme illustré sur la figure 11H,
- individualisation optionnelle, ceci notamment dans le cadre d'une fabrication collective de détecteurs par exemple sous la forme de matrices, de la structure de détection 100 par une gravure localisée en périphérie de la structure de détection de la deuxième couche d'arrêt 142, et de la première couche d'arrêt 141, en arrêtant la gravure sur la couche de matériau sacrificielle 371,
- suppression par gravure sélective du matériau sacrificiel 371, 372 notamment par une mise en contact de l'ensemble support de détection 101/ support de lecture 252 avec de l'acide fluorhydrique en phase vapeur, le composant de détection 1 étant ainsi formé comme illustré sur la figure 10.

*Deuxième mode de réalisation*

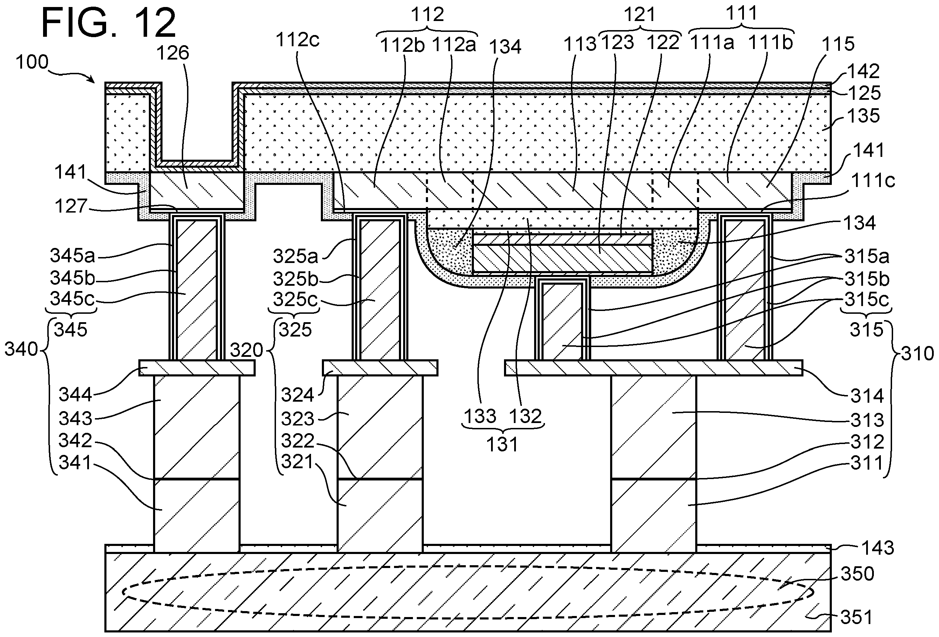

La figure 12 illustre un composant de détection 1 de rayonnement électromagnétique selon un deuxième mode de réalisation conforme à la troisième possibilité de l'invention.

Ainsi conformément à la troisième possibilité de l'invention, un composant de détection 1 selon ce deuxième mode de réalisation se différencie d'un composant de détection 1 selon le premier mode de réalisation en ce que la zone source 111 et la première électrode de grille 121 sont court-circuitées, celles-ci partageant le premier bras de connexion 310 qui présente une séparation afin de leur appliquer une même polarisation en parallèle, en ce que la première couche de diélectrique de grille 131 présente une interface dipolaire, et en ce que le circuit d'alimentation 350 permet d'alimenter la structure de détection 1 en conformité avec la troisième possibilité de l'invention.

Ainsi comme montré sur la figure 12, dans ce deuxième mode de réalisation, la première couche de diélectrique de grille 131, afin de permettre une telle formation d'une interface dipolaire, comprend une première et une deuxième sous-couche 132, 133 de respectivement un premier et un deuxième matériau diélectriques aptes à former ensemble l'interface dipolaire par la création d'un dipôle électrostatique entre eux. Dans le présent deuxième mode de réalisation, la première sous-couche 132, celle recouvrant la zone de canal 113 et les premières parties 111a, 112a de la zone source 111 et de la zone de drain 112, est une couche de dioxyde de silicium tandis que la deuxième sous-couche 133, disposée entre la première sous-couche 132 et l'électrode de grille, est réalisée en alumine Al$_2$O$_3$.

La première sous-couche 132 peut présenter une épaisseur comprise entre 5 et 15 nm tandis que la deuxième sous-couche 133 présentant une épaisseur comprise entre 3 et 15 nm.

De même, comme montré sur la figure 12, le premier bras de connexion 310 présente une cinquième partie de connexion 315 double, l'une s'étendant entre la deuxième partie d'isolation thermique 314 et la première grille de connexion 121 et l'autre s'étendant entre la deuxième partie d'isolation thermique 314 et la deuxième partie 111b de la zone source 111.

Ainsi, le composant de détection ne comporte qu'un premier, un deuxième et quatrième bras de connexion 310, 320, 340 et le circuit de connexion 350 ne comporte qu'une première, deuxième et troisième zone de connexion d'alimentation en lien avec lesdits premier, deuxième et quatrième bras de connexion 310, 320, 340.

Un procédé de fabrication d'un composant de détection 1 selon le deuxième procédé de fabrication se distingue d'un procédé de fabrication selon le premier mode de réalisation en ce que :

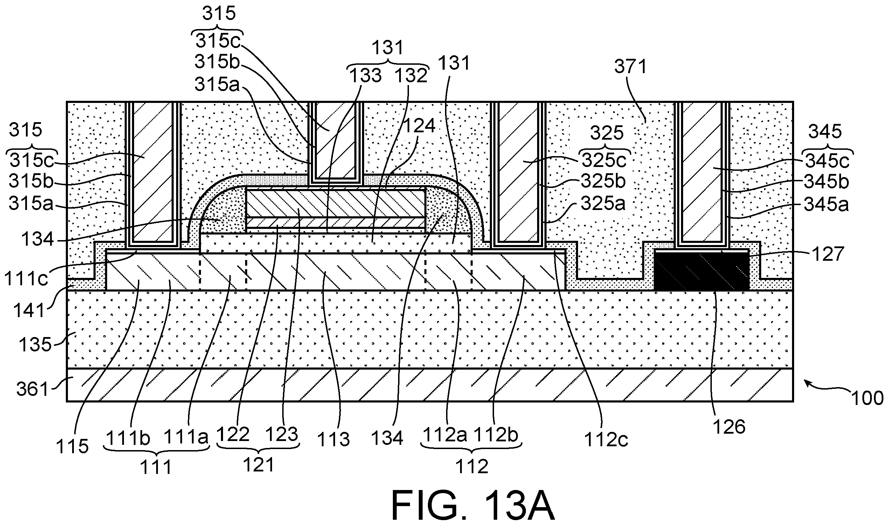

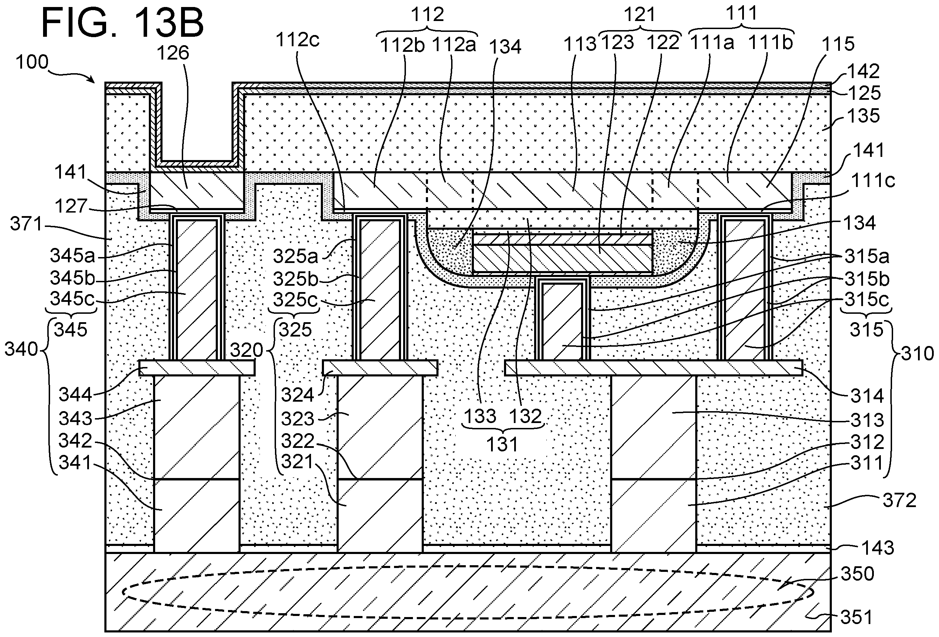

- l'étape d'oxydation thermique de la couche semiconductrice 115 permet de former la première sous-couche 132 de la première couche de diélectrique de grille 131,
- il est prévu entre l'étape d'oxydation thermique de la couche semiconductrice 115 et l'étape de dépôt successif et localisé de la première couche conductrice 122 et de la deuxième couche conductrice 123, une étape supplémentaire de dépôt localisé de la deuxième sous-couche 133 en contact de la première sous-couche 132,
- lors de l'étape de formation des troisième parties d'isolation thermique 314, 324, 344 des bras de connexion 310, 320, 340 conformément à l'enseignement du document US 16/334109, seules les première, deuxième et troisième deuxième parties d'isolation thermique 314, 324, 344 sont formées, comme montré sur les figures 12 et 13A,
- lors de l'étape de fourniture du substrat de lecture, le circuit d'alimentation 351 ne comporte qu'une première à une troisième zone d'alimentation et est conforme à la troisième possibilité de l'invention,
- lors des étapes liées à la fabrication des quatrièmes et troisièmes parties de collage 311, 321, 331, 322, 322, 332 des bras de connexion 310, 320, 340, il est réalisé uniquement les première, deuxième et quatrième quatrièmes et troisièmes parties de collage 311, 321, 331, 322, 322, 332, comme montré sur la figure 13B.

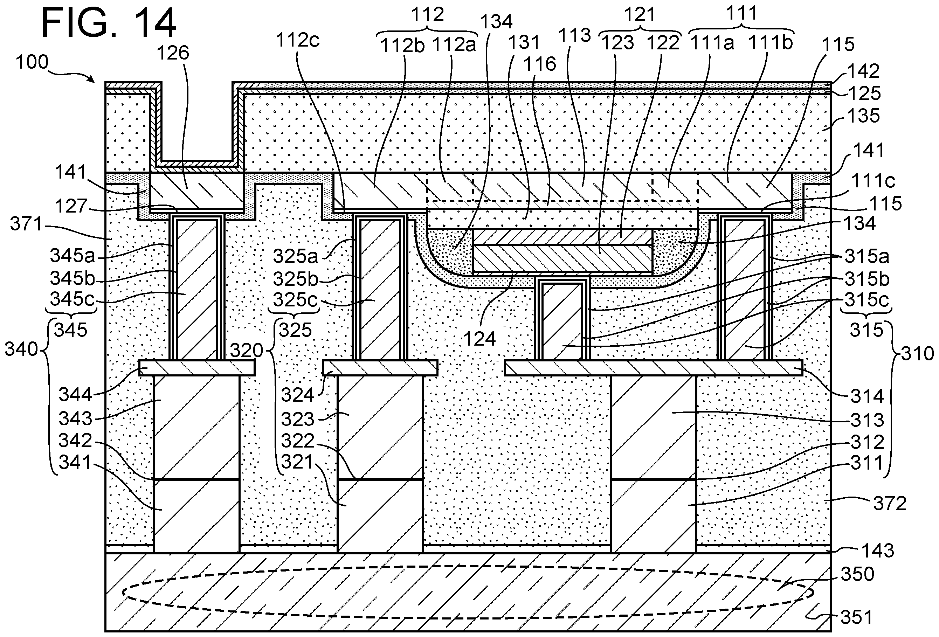

La figure 14 illustre un dispositif de détection 1 selon une variante à ce deuxième mode de réalisation dans laquelle la structure de détection 100 comprend en lieu et place d'une interface dipolaire un sur-dopage d'une portion 116 de la zone de canal destinée à la formation de la couche de blocage 114 en éléments dopants du deuxième type de conductivité, c'est-à-dire, dans le présent mode de réalisation, des éléments dopants accepteurs d'électrons, tels que des atomes de bore ou d'indium obtenus par implantation ionique d'ions de Bore B, d'ions de fluorure de Bore BF2 ou d'ions d'indium In.

Ainsi, selon cette variante, un tel dispositif de détection 1 se distingue d'un dispositif de détection 1 selon le deuxième mode de réalisation en ce que :

- la première couche de diélectrique de grille 131 comporte une unique couche diélectrique, dans la présente variante un dioxyde de silicium conformément à l'enseignement du premier mode de réalisation,
- la zone canal 113 comprend une portion 116, destinée à former la couche de blocage 114, présentant un sur-dopage en éléments accepteurs d'électrons, tel qu'un sur-dopage de l'ordre de $1.10^{19}$ cm$^{-3}$ sur une épaisseur de 20 nm.

Ainsi, le procédé de fabrication d'un dispositif de détection selon cette variante du deuxième mode de réalisation se différencie d'un procédé de fabrication d'un dispositif selon le deuxième mode de réalisation en ce que :

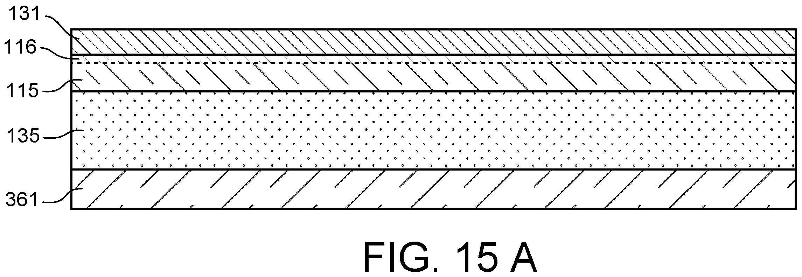

- avant l'étape d'oxydation de la première couche semiconductrice 115 pour former la première couche de diélectrique de grille 131, il est prévu les étapes supplémentaires de formation d'une couche d'oxyde sacrificiel, d'implantation de la zone canal 113 sur une partie de sa profondeur d'éléments dopants du deuxième type de conductivité, et de suppression de la couche d'oxyde sacrificiel, l'étape de recuit thermique d'activation permettant également d'activer les éléments dopants du deuxième type de conductivité implantés dans partie de la zone de canal 113 destinée à former la couche de blocage, comme illustré sur la figure 15A,

- il n'est pas prévu d'étape supplémentaire de dépôt localisé de la deuxième sous-couche 133 en contact de la première sous-couche 132.

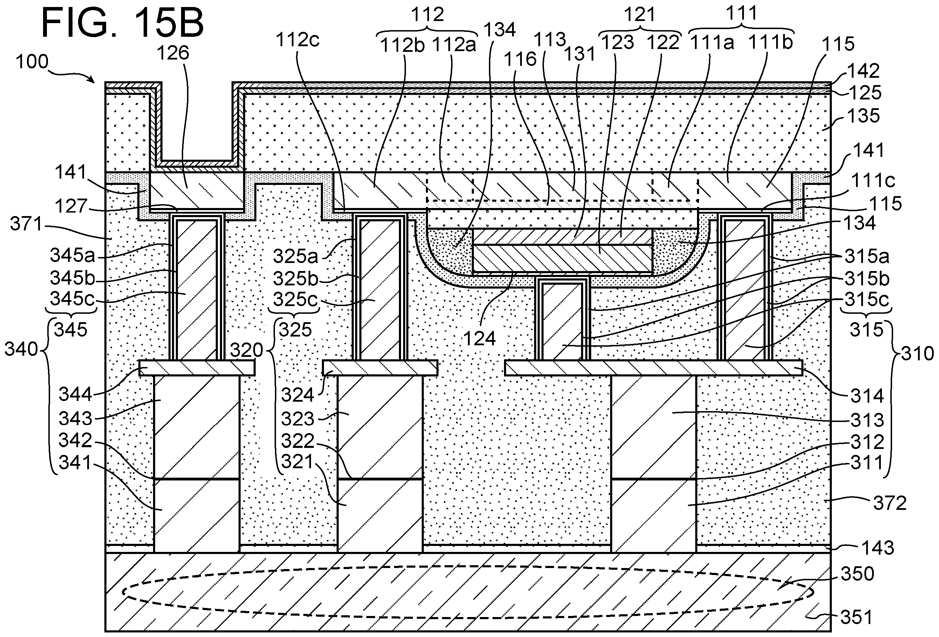

Ainsi dans cette variante du deuxième mode de réalisation, conformément au deuxième mode de réalisation, le premier bras d'isolation est conformé pour permettre une alimentation en tension de la zone source 111 et de la première électrode de grille 121, comme illustré sur la figure15B illustrant la fabrication du composant juste avant l'étape de gravure sélective du matériau sacrificiel.

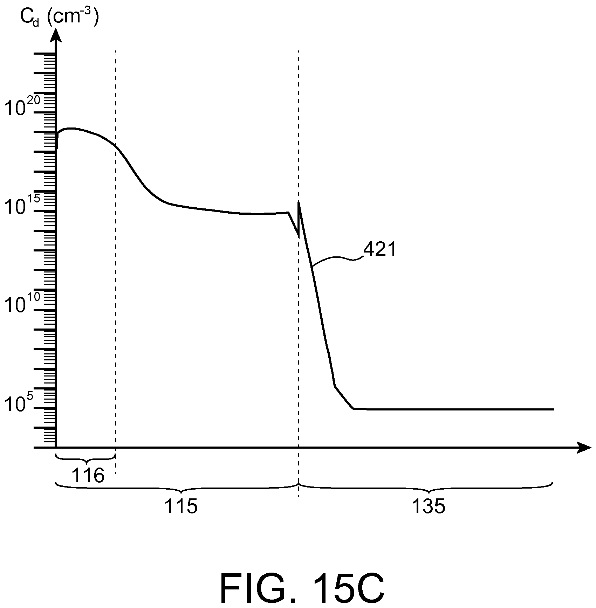

La figure 15C illustre par l'intermédiaire d'un graphique le principe de l'implantation localisée pouvant être mis en oeuvre dans le cadre d'une telle variante du deuxième mode de réalisation. En effet, cette figure montre le résultat simulé d'une implantation en ions de fluorure de bore $BF_2$+ au travers d'une couche de dioxyde de silicium d'une épaisseur de 10 nm pour une dose de $1.10^{15}$ cm$^{-2}$ à une énergie d'implantation de 3 keV pour une première couche de silicium de 67 nm et d'un recuit thermique d'activation de 1 s à 1050°C.

On peut ainsi voir sur cette figure montrant la concentration en éléments dopants Cd en fonction de la profondeur obtenue avec une telle procédure, qu'il est possible de former une portion 116 de la zone de canal 113 destinée à la formation de la couche de blocage 114 présentant une concentration en porteurs majoritaire du deuxième type de conductivité de l'ordre de $10^{19}$ cm$^{-3}$ sur une épaisseur de 20 nm, le reste de la couche présentant une concentration en porteur majoritaire du deuxième type de conductivité tendant vers $10^{15}$ cm$^{-3}$. On notera que, conformément au procédé de fabrication, la portion 116 d'étend également dans les premières parties 111a, 112a de la zone source 111 et de la zone de drain 112.

Ainsi, selon cette variante du deuxième mode de réalisation, lors de l'étape supplémentaire d'implantation localisée de la zone canal, il est possible de réaliser une implantation en ion fluorure de bore $BF_2$+ avec une dose comprise entre $1.10^{14}$ et $1.10^{15}$ cm$^{-2}$ et une énergie d'implantation comprise entre 3 et 8 keV.

*Troisième mode de réalisation*

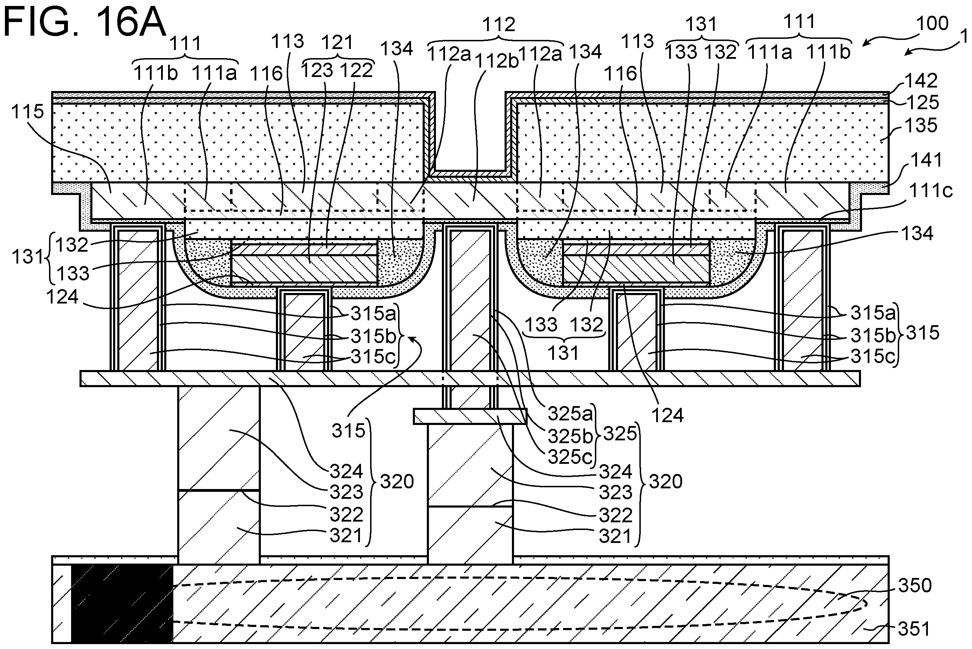

Les figures 16A et 16B illustrent un composant de détection 1 de rayonnement électromagnétique selon un troisième mode de réalisation conforme à la quatrième possibilité de l'invention dans la configuration dans laquelle la structure de détection présente un rapport largeur de la zone de canal/ sur la longueur de la zone de canal optimisé selon un principe similaire à celui de la figure 4B.

Un composant de détection 1 selon ce troisième mode de réalisation se différencie d'un composant de détection selon le deuxième mode de réalisation en ce que :

- il est prévu un sur-dosage de la portion 116 de la zone de canal 113 destinée à la formation de la couche de blocage 114 conformément à la variante du deuxième mode de réalisation,
- la deuxième électrode de grille 125 est en court-circuit avec la zone de drain 112, une telle configuration étant fournie dans ce présent mode de réalisation en substituant la zone de drain 112 à la zone de connexion 126 comme le montre les figures 16A et 16B, la structure de détection 100 étant donc exempte de zone de connexion 126 en tant que telle,
- la zone source 111 et la zone canal 113 sont dédoublées en respectivement une deux sous-zones source et deux sous-zones canal, les sous-zones sources et les sous-zones de canal étant disposées de part et d'autre de la zone de drain de manière à former un transistor dédoublé, conformément au dédoublement de la zone de canal 113, la première électrode de grille 121 est également dédoublée, comme illustré sur les figures 16A et 16B, et
- le circuit d'alimentation 350 permet d'alimenter la structure de détection 1 en conformité avec la quatrième possibilité de l'invention.

On notera que, conformément au procédé de fabrication, dans ce troisième mode de réalisation, que la portion sur-dopée 116 s'étend également dans les premières parties 111a, 112a de la zone source 111 et de la zone de drain 112

On peut ainsi voir que dans ce troisième mode de réalisation, la zone de canal 113 présente, d'une manière similaire à la variante du deuxième mode de réalisation, un sur-dopage en éléments dopants du deuxième type de conductivité dans une portion 116 de la zone de canal 113 destinée à la formation de la couche de blocage 114, tel qu'un sur-dopage de l'ordre de $1.10^{19}$ cm$^{-3}$ sur une épaisseur de 20 nm.

De même, comme illustré sur la figure 16A, afin d'optimiser le rapport largeur de la zone de canal/ sur la longueur de la zone de canal, la structure de détection présente une zone de drain 112 centrale avec d'un côté un premier ensemble de sous-zone source et de sous-zone canal et de l'autre côté un deuxième ensemble de sous-zone source et de sous-zone canal.

On peut également voir sur les figures 16A et 16B que, dans ce mode de réalisation, d'une manière similaire au deuxième mode de réalisation, le premier bras de connexion 310 présente une première partie de connexion 315 quadruplée pour permettre une connexion de chacune des sous-zones source 111 et de chacune des sous-électrodes de grille 121, la deuxième partie d'isolation thermique 314 s'étendant sur toute la largeur de la structure de détection 100, voire au-delà, afin de permettre de connecter l'ensemble des éléments de la première partie de connexion 315 quadruplée du premier bras de connexion 310.

Le procédé de fabrication d'un composant de détection 1 selon ce troisième mode de réalisation se différencie d'un composant de détection 1 selon le deuxième mode de réalisation en ce que :

- lors de l'étape de la gravure localisée de la première couche semiconductrice 115, cette gravure est réalisée afin de conserver la partie de la première couche semiconductrice 115 destinée à former les sous-zones source 111 et de canal 113 et la zone de drain 112 centrale, cette partie étant dénuée de zone de connexion en tant que telle puisque c'est la zone de drain 112 qui fait office de zone de connexion pour la deuxième électrode de grille 121,
- avant l'étape d'oxydation de la première couche semiconductrice 115 pour former la première couche de diélectrique de grille 131, il est prévu les étapes supplémentaires de formation d'une couche d'oxyde sacrificiel, d'implantation localisée de la zone canal 113 sur une partie de sa profondeur de dopant du deuxième type de conductivité, et suppression de la couche d'oxyde sacrificiel, l'étape de recuit thermique d'activation permettant également d'activer les éléments dopants du deuxième type de conductivité implantés dans la couche de blocage,
- lors de l'étape de gravure localisée de la couche de matériau sacrificiel 371 pour former une ouverture respective correspondant à la première partie 315, 325 de chaque bras de connexion 310, 320, il est prévu quatre ouvertures pour la première partie de connexion 315 du premier bras de connexion 310 débouchant respectivement sur chacune des sous-zones source 111 et des sous-premières électrode de grille 121 et une unique ouverture pour la première partie de connexion 325 du deuxième bras de connexion 320 correspondant à la zone de drain 112, en tant que telle, la deuxième électrode de grille 125 étant au contact de la zone de drain 112 par une ouverture 313 à travers la deuxième couche d'oxyde 135, lesdites deux ouvertures sur la zone de drain étant superposées dans le cas de la figure 16A et décalées dans le cas de la figure 16B,
- lors de l'étape de formation des deuxième parties d'isolation thermique 314, 324 des bras de connexion 310, 320 conformément à l'enseignement du document US 16/334109, seules les première et deuxième deuxièmes parties d'isolation thermique 314, 324 sont formées, la deuxièmes partie d'isolation thermique 314 du premier bras de connexion 310 étant en contact de chaque éléments de la première partie de connexion 315 du premier bras de connexion 310,

- lors de l'étape de fourniture du substrat de lecture, le circuit d'alimentation ne comporte qu'une première à une deuxième zone d'alimentation et le circuit d'alimentation est conforme à la quatrième possibilité de l'invention,
- lors des étapes liées à la fabrication des quatrièmes et troisièmes parties de collage 311, 321, 322, 322 des bras de connexion 310, 320, il est réalisé uniquement les quatrièmes et troisièmes parties de collage 311, 321, 322, 322 des premier et deuxième bras de connexion 310, 320.

Bien entendu, un tel troisième mode de réalisation est notamment fourni afin d'illustrer la possibilité d'optimisation du rapport largeur de la zone de canal/ sur la longueur de la zone de canal dans le cadre l'invention en fournissant un transistor à multi-zones de canal ou à grilles mutiples ou encore à grille en « peigne à multiple dents », la structure présentant, dans le présent mode de réalisation deux sous-zones de canal 113 et donc une électrode de grille double. Selon le même principe et comme déjà présenté en lien avec la figure 4B, il est parfaitement envisageable, sans que l'on sorte du cadre de l'invention, de fournir un composant de détection 1 présentant un nombre de sous-zones de canal 113, et donc de grilles, supérieur à 2 (la figure 4B), par exemple 3, voire 4 ou même 7 sous-zones de canal 113. Une telle configuration est également connue sous la dénomination de grille à « peigne à multiple dents ».

*Quatrième mode de réalisation*

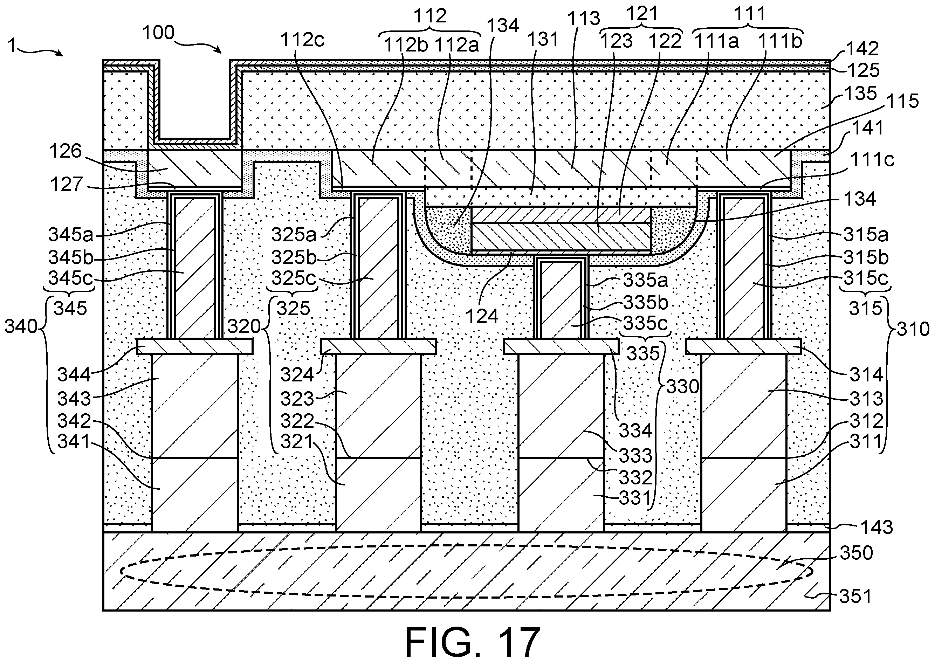

La figure 17 illustre un dispositif de détection1 selon un quatrième mode de réalisation de l'invention conforme aux cinquième et sixième possibilités de l'invention.

Ainsi un dispositif de détection 1 selon le quatrième mode de réalisation se différencie d'un dispositif de détection 1 selon le premier mode de réalisation en ce que la zone canal présente le premier type de conductivité, c'est-à-dire, dans ce quatrième mode de réalisation, un dopage N, et en ce que le circuit d'alimentation est adapté pour alimenter la structure de détection 100 en conformité avec l'une de la cinquième et de la sixième possibilité de l'invention.

Un procédé de fabrication d'un dispositif de détection 1 selon ce quatrième mode de réalisation se différencie d'un procédé de fabrication d'un dispositif de détection 1 selon le premier mode de réalisation en ce que :

- lors de l'étape de fourniture du substrat SOI comprenant le substrat semiconducteur 361, la couche d'oxyde destinée à former la deuxième couche de diélectrique de grille 135 et la première couche semiconductrice 115, la première couche semiconductrice présente le premier type de conductivité, et
- lors de l'étape de fourniture du premier substrat de lecture 351, le circuit d'alimentation est conforme à la cinquième ou sixième possibilité.

Bien entendu, conformément au premier mode de réalisation, en variante, le circuit d'alimentation peut également être adapté pour alimenter la structure de détection selon la cinquième possibilité et selon la sixième possibilité, le circuit d'alimentation 350 pouvant être commandé pour passer de l'une à l'autre ou configuré pour passer de l'une à l'autre en fonction de certaines conditions.

*Cinquième mode de réalisation*

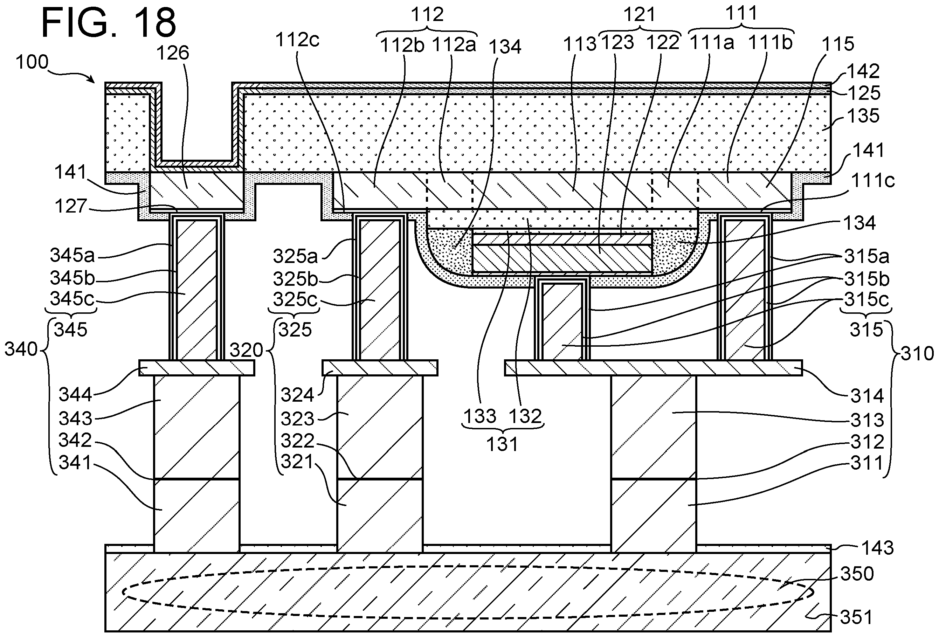

La figure 18 illustre un composant selon un cinquième mode de réalisation conforme à la septième possibilité de l'invention.

Ainsi un dispositif de détection 1 selon le cinquième mode de réalisation se différencie d'un dispositif de détection 1 selon le deuxième mode de réalisation en ce que la zone canal présente le premier type de conductivité, c'est-à-dire, dans ce quatrième mode de réalisation, un dopage N, et en ce que le circuit d'alimentation est adapté pour alimenter la structure de détection 100 en conformité avec la septième possibilité de l'invention.

Un procédé de fabrication d'un dispositif de détection 1 selon ce cinquième mode de réalisation se différencie d'un procédé de fabrication d'un dispositif de détection 1 selon le deuxième mode de réalisation en ce que :

- lors de l'étape de fourniture du substrat SOI comprenant le substrat semiconducteur 361, la couche d'oxyde destinée à former la deuxième couche de diélectrique de grille 135 et la première couche semiconductrice 115, la première couche semiconductrice présente le premier type de conductivité, et
- lors de l'étape de fourniture du premier substrat de lecture 351, le circuit d'alimentation est conforme à la septième possibilité.

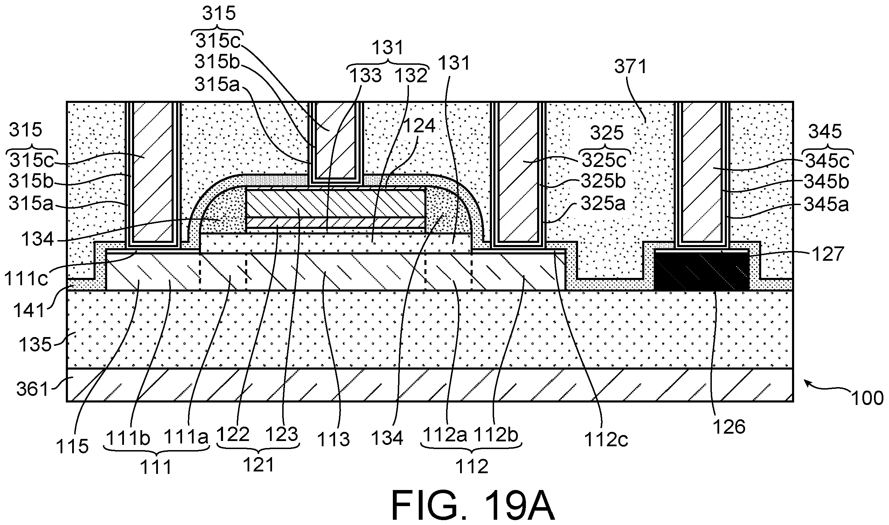

On notera en particulier, que conformément au deuxième mode de réalisation et comme illustré sur la figure 19A, que la première couche de diélectrique de grille 131, afin de permettre une telle formation d'une interface dipolaire, comprend une première et une deuxième sous-couche 132, 133 de respectivement un premier et un deuxième matériau diélectrique aptes à former ensemble l'interface dipolaire par la création d'un dipôle électrostatique entre eux. Dans le présent cinquième mode de réalisation, la première sous-couche 132, celle recouvrant la zone de canal 113 et les premières parties 111a, 112a de la zone source 111 et de la zone de drain 112, est une couche de dioxyde de silicium tandis que la deuxième sous-couche 133, disposée entre la première sous-couche 132 et l'électrode de grille, est réalisée en alumine $Al_2O_3$.

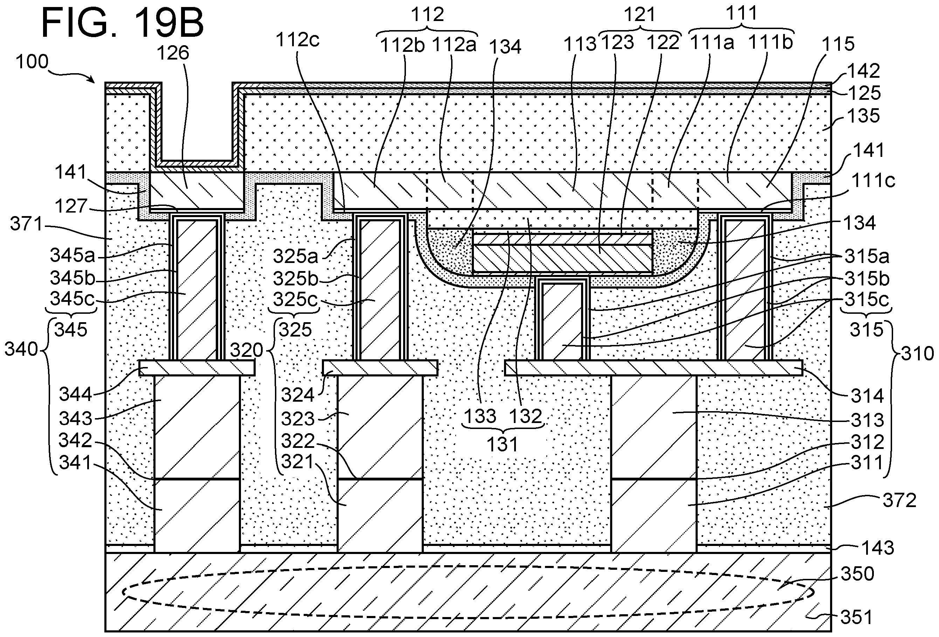

De plus, comme le montre la figure 19B, dans un tel cinquième mode de réalisation, le composant de détection 1 ne comporte que les deuxièmes parties d'isolation thermique 314, 324, 344 du premier, deuxième et quatrième bras de connexion 310, 320, 340 formées de telle manière que la deuxième partie d'isolation thermique 314 du premier bras de connexion 310 permet à connecter la première partie de connexion dédoublée du premier bras de connexion 310.

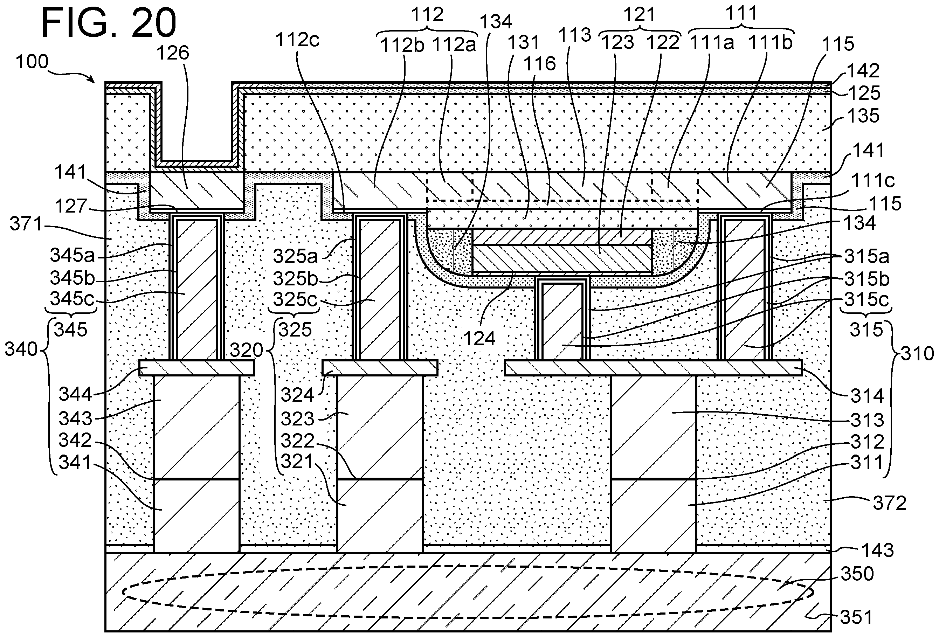

La figure 20 illustre un composant selon une variante du cinquième mode de réalisation conforme à une variante de la septième possibilité de l'invention.

Ainsi un dispositif de détection 1 selon cette variante du cinquième mode de réalisation se différencie d'un dispositif de détection 1 selon la variante du deuxième mode de réalisation en ce que la zone canal présente le premier type de conductivité, c'est-à-dire, dans cette variante du cinquième mode de réalisation, un dopage N, et en ce que le circuit d'alimentation est adapté pour alimenter la structure de détection 100 en conformité avec la septième possibilité de l'invention.

Un procédé de fabrication d'un dispositif de détection 1 selon ce cinquième mode de réalisation se différencie d'un procédé de fabrication d'un dispositif de détection 1 selon le deuxième mode de réalisation en ce que :

- lors de l'étape de fourniture du substrat SOI comprenant le substrat semiconducteur 361, la couche d'oxyde destinée à former la deuxième couche de diélectrique de grille 135 et la première couche semiconductrice 115, la première couche semiconductrice présente le premier type de conductivité, et
- lors de l'étape de fourniture du premier substrat de lecture 351, le circuit d'alimentation est conforme à la septième possibilité de l'invention.

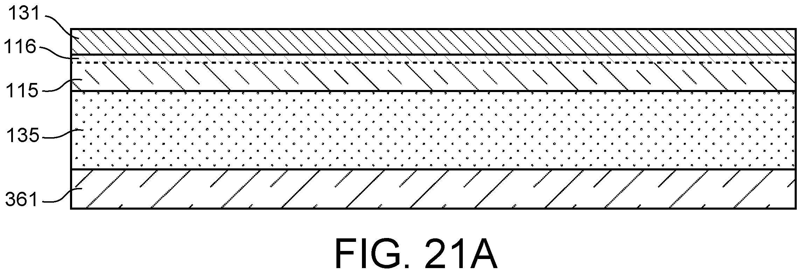

Un composant de détection, selon le principe déjà présenté dans le cadre de la variante du deuxième mode de réalisation en lien avec la figure 15C, la formation de la couche de blocage par un sur-dopage d'une portion de la zone de canal 113 destinée à la formation de cette dernière peut être obtenue au moyen d'une implantation en ion fluorure de bore $BF_2+$ ou d'indium In avec une dose comprise entre $1.10^{14}$ et $1.10^{15}$ cm$^{-2}$ et une énergie d'implantation comprise entre 3 et 8 keV, comme illustré sur la figure 21A.

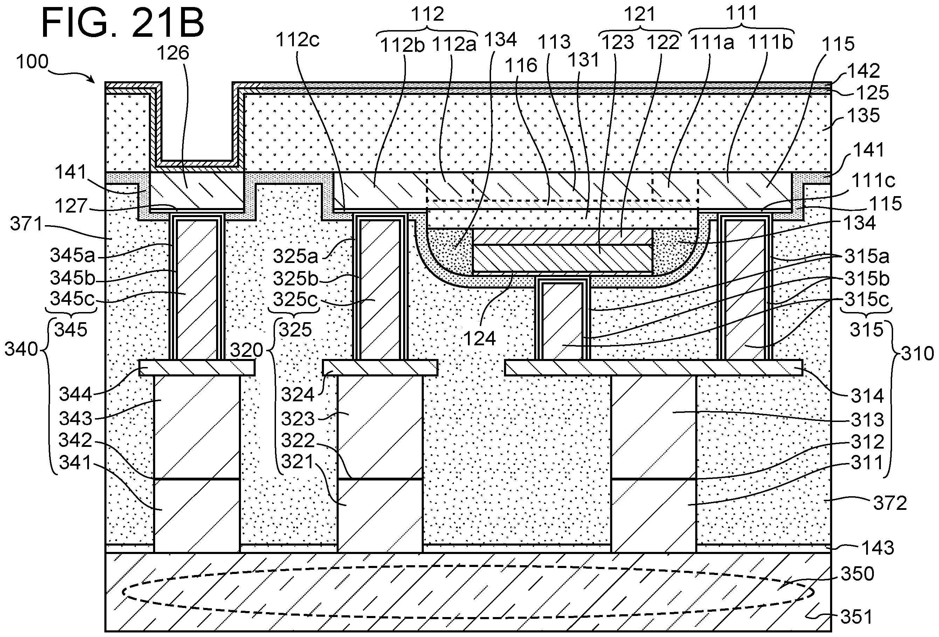

De plus selon cette variante et conformément au cinquième mode de réalisation, le composant de détection 1 ne comporte que les deuxièmes parties d'isolation thermique 314, 324, 344 du premier, deuxième et quatrième bras de connexion 310, 320, 340. En effet, comme montré sur la figure 21B, de la deuxième partie d'isolation thermique 314 permettant de connecter la première partie de connexion dédoublée du premier bras de connexion 310 et donc la zone source 111 et la première électrode de grille 121.

*Sixième mode de réalisation*

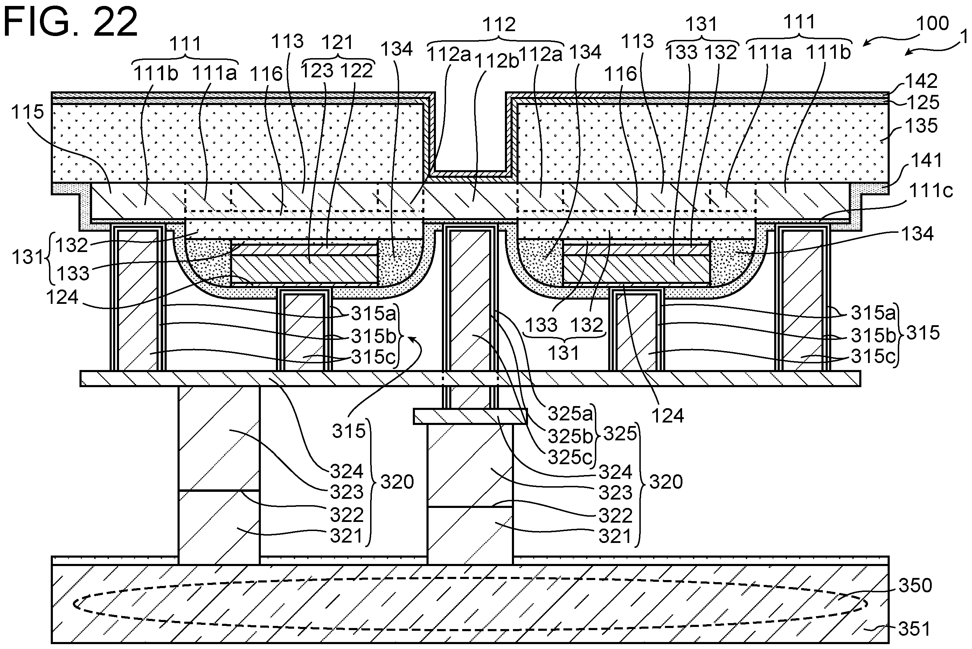

La figure 22 illustre un composant de détection 1 selon un sixième mode de réalisation conforme à la huitième possibilité de l'invention.

Ainsi un dispositif de détection 1 selon le sixième mode de réalisation se différencie d'un dispositif de détection 1 selon le troisième mode de réalisation en ce que la zone canal 113 présente le premier type de conductivité, c'est-à-dire, dans ce quatrième mode de réalisation, un dopage N, et en ce que le circuit d'alimentation est adapté pour alimenter la structure de détection 100 en conformité avec la huitième possibilité de l'invention.

Ainsi, comme le montre la figure 22, dans ce sixième mode de réalisation, la première partie de connexion est quadruplée de manière à alimenter en tension les deux sous-zone source 111, les deux sous-premières électrodes de grille 121. Concernant la deuxième électrode de grille 125, sont alimentation électrique est réalisé au travers de la zone de drain 112.

Un procédé de fabrication d'un dispositif de détection 1 selon ce sixième mode de réalisation se différencie d'un procédé de fabrication d'un dispositif de détection 1 selon le deuxième mode de réalisation en ce que :

- lors de l'étape de fourniture du substrat SOI comprenant le substrat semiconducteur 361, la couche d'oxyde destinée à former la deuxième couche de diélectrique de grille 135 et la première couche semiconductrice 115, la première couche semiconductrice présente le premier type de conductivité, et
- lors de l'étape de fourniture du premier substrat de lecture 351, le circuit d'alimentation est conforme à la huitième possibilité de l'invention.

*Septième mode de réalisation*

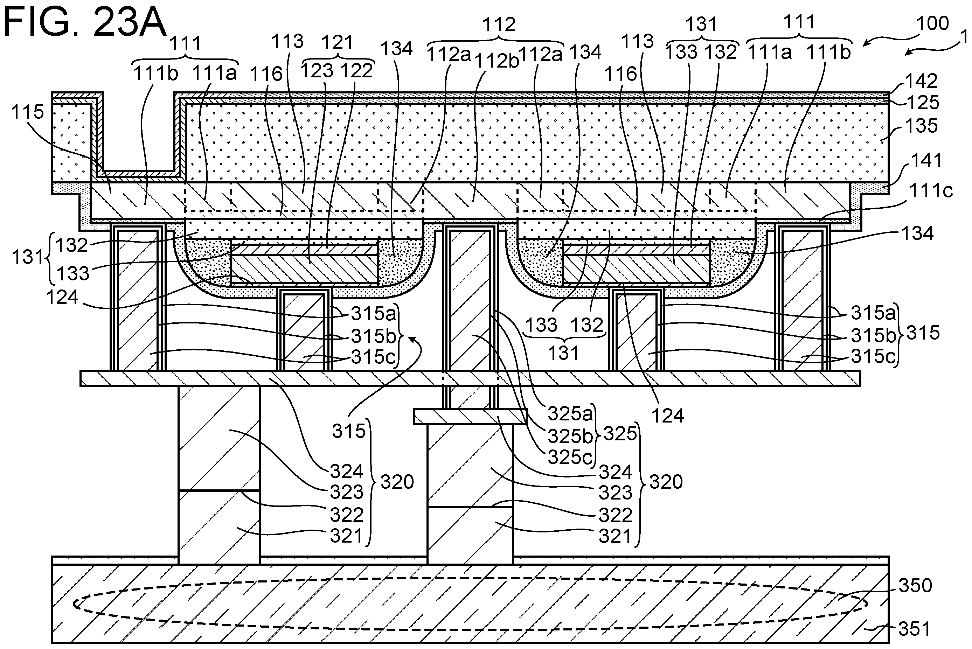

Les figures 23A et 23B illustrent un composant de détection 1 selon un septième mode de réalisation conforme à la neuvième possibilité de l'invention.

Ainsi un dispositif de détection 1 selon le septième mode de réalisation se différencie d'un dispositif de détection 1 selon le sixième mode de réalisation en ce que les sous-zone source 111, la première électrode de grille 121 et la deuxième électrode de grille 122 sont en court-circuit et en ce que le circuit d'alimentation est adaptée pour alimenter la structure de détection 100 en conformité avec la neuvième possibilité de l'invention.

Dans ce septième mode de réalisation, d'une même manière que pour le sixième mode de réalisation, afin d'optimiser le rapport largeur de la zone de canal/ sur la longueur de la zone de canal, la structure de détection présente une zone de drain 112 centrale avec d'un côté un premier ensemble de sous-zone source et de sous-zone canal et de l'autre côté un deuxième ensemble de sous-zone source et de sous-zone canal.

Le premier bras de connexion 310 présente une première partie de connexion 315 quadruplée pour permettre une connexion de chacune des sous-zones source 111 et de chacune des sous premières électrode de grille 121. La deuxième électrode de grille 125 s'étend en partie dans une ouverture de la deuxième couche de diélectrique de grille 135 en contact de l'une des sous-zones source 111 formant une zone de connexion pour ladite deuxième électrode de grille 125.

Le procédé de fabrication d'un composant de détection 1 selon ce septième mode de réalisation se différencie d'un composant de détection 1 selon le sixième mode de réalisation en ce que :

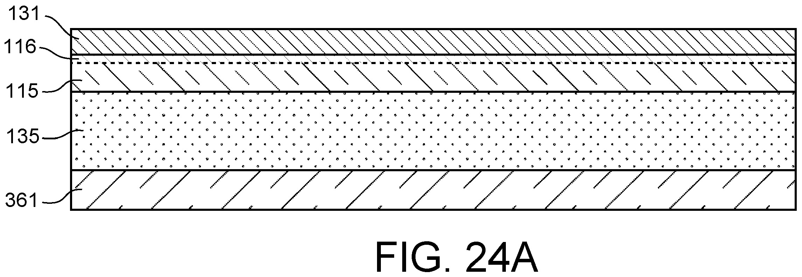

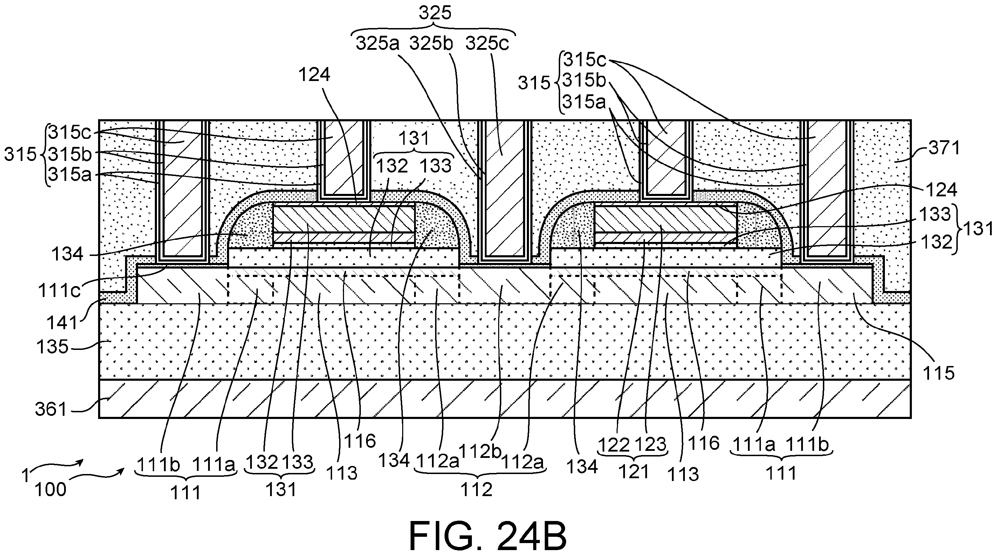

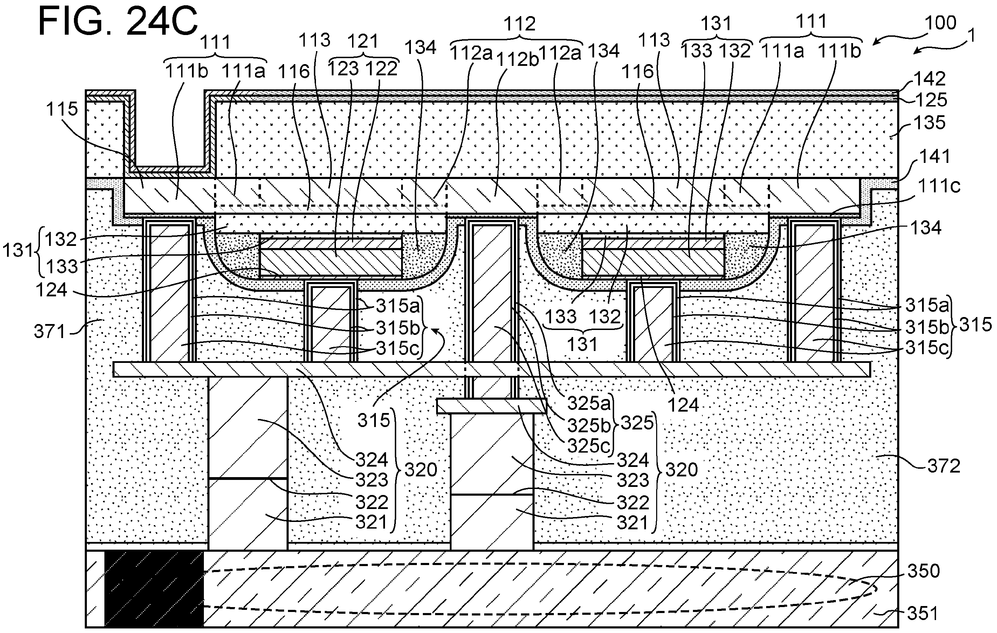

- l'étape supplémentaire d'implantation est réalisée sur une portion 116 de la couche 115 de manière qu'une portion 116 de chacune des deux sous-zones de canal 113 qui est destinée à former la couche de blocage 114 présente ledit sur-dopage, comme illustré sur la figure 24A,
- lors de l'étape de gravure localisée de la couche de matériau sacrificiel 371 pour former une ouverture respective correspondant à la première partie 315, 325 de chaque bras de connexion 310, 320, il est prévu quatre ouvertures pour la première partie de connexion 315 du premier bras de connexion 310 débouchant respectivement sur chacune des sous-zones source 111, et chacune des sous-premières électrode de grille 121, et une unique ouverture pour la première partie de connexion 325 du deuxième bras de connexion 320 débouchant sur la zone de drain 112, comme illustré sur les figures 23B et 24B,
- il est prévu une étape de formation d'une ouverture dans la deuxième couche de diélectrique de grille 135 pour permettre une prise de contact entre la deuxième électrode de grille et l'un des sous-zones source 1111la deuxième électrode de grille 125 et une unique ouverture pour la première partie de connexion 325 du deuxième bras de connexion 320 débouchant sur la zone de drain 112, comme illustré sur la figure 24B,
lors de l'étape de formation des deuxièmes parties d'isolation thermique 314, 324 des bras de connexion 310, 320 conformément à l'enseignement du document US 16/334109, seule les deuxièmes parties d'isolation thermique 314, 324 des premier et deuxième bras de connexion 310, 320 sont formées, la deuxième partie d'isolation thermique 314 du premier bras de connexion 310 étant en contact de chaque éléments de la première partie de connexion 315 du premier bras de connexion 310, comme illustré sur la figure 24C,
- lors de l'étape de fourniture du substrat de lecture 351, le circuit d'alimentation 350 ne comporte qu'une première et une deuxième zone d'alimentation et est conforme à la neuvième possibilité de l'invention.

Un tel septième mode de réalisation, d'une manière identique aux troisième et sixième modes de réalisation, est notamment fourni afin d'illustrer la possibilité d'optimisation du rapport largeur de la zone de canal/ sur la longueur de la zone de canal dans le cadre l'invention en fournissant un transistor à multi-zones de canal ou multi-grilles ou encore à grille en « peigne à multiple dents », la structure présentant, dans le présent mode de réalisation deux sous-zones de canal 113. Selon le même principe et comme déjà présenté en lien avec la figure 9B, il est parfaitement envisageable, sans que l'on sorte du cadre de l'invention, de fournir un composant de détection 1 présentant un nombre de sous-zones de canal 113 supérieur à 2 par exemple 3, comme illustré sur la figure 9B, voire 4 ou même 7 sous-zones de canal 113. Une telle configuration est également connue sous la dénomination de grille à « peigne à multiple dents ».

Bien entendu, si dans les présentes possibilités de l'invention, modes de réalisation et variantes des modes de réalisation, il a été choisi de décrire des structures de détection dont le premier type de conductivité est un type de conductivité dans lequel les électrons sont les porteurs majoritaires, autrement dit correspondant à un dopage N, il également parfaitement envisageable, sans que l'on sorte du cadre de l'invention, que le premier type de conductivité soit un type de conductivité dans lequel les trous sont les porteurs majoritaires, autrement dit correspondant à un dopage P, sans que l'on sorte du cadre de l'invention. L'homme du métier est en effet apte à extrapoler, à partir de simples tests de routine, le présent enseignement pour une telle configuration qui est équivalente.

De plus, si dans le cadre des deuxième, troisième, cinquième, sixième et septième modes de réalisation, la « pré-polarisation » apportée soit par dipôle électrostatique, soir par sur-dopage, vise à la formation de la couche de blocage au niveau de la première face de la zone de canal, il est bien entendu également envisageable, sans que l'on sorte du cadre de l'invention, d'utiliser une telle « pré-polarisation » en vie de la formation de la couche de blocage au niveau de la deuxième face de la zone de canal.

## Revendications

**1.** Composant de détection (1) de rayonnement électromagnétique (λ) comprenant une structure de détection (100) et un circuit d'alimentation (350) de ladite structure de détection (100),
La structure de détection (100) comprenant :

    - au moins un élément absorbant configuré pour absorber le rayonnement électromagnétique,
    - un transistor associé avec l'élément absorbant pour détecter l'élévation de température dudit élément absorbant lors de l'absorption du rayonnement électromagnétique (λ), le transistor comportant :

    o au moins une première zone semiconductrice (111), dite zone source, et au moins une deuxième zone (112), dite zone de drain, chacune d'un premier type de conductivité,
    o au moins une troisième zone semiconductrice (113), dite zone de canal, séparant l'une de l'autre la zone source (111) et la zone de drain (112), présentant une première et une deuxième face opposées l'une à l'autre, les première et deuxième faces s'étendant entre la zone source (111) et la zone drain (112),
    o une première électrode grille (121) agencée en regard de la première face de la zone canal (113) pour polariser la zone canal, ladite première électrode de grille (121) étant séparée de la zone canal (113) par une première couche de diélectrique de grille (131),
    o une deuxième électrode de grille (125) agencée en regard de la deuxième face de la zone canal (113) pour polariser la zone canal, ladite deuxième électrode de grille (125) étant séparée de la zone canal (113) par une deuxième couche de diélectrique de grille (135),

dans lequel le circuit d'alimentation (350) est configuré pour alimenter électriquement chacune de la zone source (111), de la zone de drain (112), et des première et deuxième électrodes de grille (121, 125) de la structure de détection (100) en étant connecté à ces dernières,
le composant de détection (1) **<u>étant caractérisé en ce que</u>** le circuit d'alimentation (350) est configuré pour alimenter la structure de détection (100) en fonctionnement de telle manière que la zone de canal (113) présente au niveau de l'une parmi la première et la deuxième face une couche (114) dans laquelle les porteurs d'un deuxième type de conductivité opposé au premier type de conductivité sont prépondérants, ladite couche (114) étant dite couche de blocage (114.

**2.** Composant de détection (1) de rayonnement électromagnétique selon la revendication 1, dans lequel la deuxième couche de diélectrique de grille (135) présente une épaisseur comprise entre 10 et 150 nm, l'épaisseur de la deuxième couche de diélectrique de grille (135) étant préférentiellement comprise entre 30 et 70 nm.

**3.** Composant de détection (1) de rayonnement électromagnétique selon la revendication 1 ou 2 dans lequel au moins l'une de la première et de la deuxième couche de diélectrique de grille (131, 135) comprend une première et une deuxième sous-couche de respectivement un premier et un deuxième matériau diélectrique aptes à former un dipôle électrostatique entre eux, les premier et deuxième matériaux étant préférentiellement et respectivement du dioxyde de silicium et de l'alumine.

4. Composant de détection (1) de rayonnement électromagnétique selon l'une quelconque de la revendication 1 à 3 dans lequel la zone de canal (113) comprend dans une portion (116) destinée à former la couche de blocage (114) une concentration en éléments dopants supérieure au reste de la zone de canal (113).

5. Composant de détection (1) de rayonnement électromagnétique selon la revendication 3 ou 4, dans lequel la zone source (111) et la première électrode de grille (121) sont court-circuitées.

6. Composant de détection (1) de rayonnement électromagnétique selon la revendication 5, dans lequel la zone de drain (112) et la deuxième électrode de grille (125) sont court-circuitées.

7. Composant de détection de rayonnement électromagnétique selon la revendication 5, dans lequel la zone de canal (113) est du premier type de conductivité, la couche de blocage (114) étant une couche d'inversion et dans lequel la deuxième électrode de grille (125) est en court-circuit avec la première électrode de grille (121) et avec la zone source (111).

8. Composant de détection (1) de rayonnement électromagnétique selon l'une quelconque des revendications 1 à 6, dans lequel la zone de canal (113) présente le deuxième type de conductivité, la couche de de blocage (114) étant une couche d'accumulation.

9. Composant de détection (1) de rayonnement électromagnétique selon l'une quelconque des revendications 1 à 6, dans lequel la zone de canal (113) est du premier type de conductivité, la couche de blocage (114) étant une couche d'inversion.

10. Composant de détection (1) de rayonnement électromagnétique selon l'une quelconque des revendications 1 à 9, dans lequel l'élément absorbant comprend au moins l'un parmi :

    - au moins une portion de la première électrode de grille (121),
    - au moins une portion de la deuxième électrode de grille (122), et

- au moins une portion piste de conduction reliant la structure de détection (100) et le circuit d'alimentation (350).

11. Procédé de fabrication d'un composant de détection (1) de rayonnement électromagnétique, comprenant les étapes suivantes de :

    - fourniture d'une structure de détection (100), la structure de détection (100) comprenant :

        o au moins un élément absorbant configuré pour absorber le rayonnement électromagnétique,
        o un transistor associé avec l'élément absorbant pour détecter l'élévation de température dudit élément absorbant lors de l'absorption du rayonnement électromagnétique, le transistor comportant :

            . au moins une première zone semiconductrice (111), dite zone source, et au moins une deuxième zone semiconductrice (112), dite zone de drain, d'un premier type de conductivité,
            . au moins une troisième zone semiconductrice (113), dite zone de canal, séparant l'une de l'autre la zone source (111) et la zone de drain (112), présentant une première et une deuxième face opposées l'une à l'autre et s'étendant entre la zone source (111) et la zone drain (112),
            . une première électrode de grille (121) agencée en regard de la première face de la zone de canal (113) pour polariser la zone de canal (113),
            . une deuxième électrode de grille (125) agencée en regard de la deuxième face de la zone de canal (113) pour la polariser la zone de canal (113),
        - fourniture d'un circuit d'alimentation (350) configuré pour alimenter électriquement chacune de la zone source (111), de la zone de drain (112), et des première et deuxième électrodes de grille (121, 125) de la structure de détection (100),

    le procédé comprenant une étape de connexion de la structure de détection (100) avec le circuit d'alimentation (350), ladite étape étant soit indépendante de l'étape de fourniture d'une structure de détection (100) et de fourniture du circuit d'alimentation (350) soit concomitante avec au moins l'une d'elles,
    le procédé de fabrication **étant caractérisé en ce que** lors de la fourniture du circuit d'alimentation (350), le circuit d'alimentation (350) est configuré pour alimenter la structure de détection (100) en fonctionnement de telle manière que la zone de canal (113) présente au niveau de l'une parmi la première et la deuxième face une couche (114) dans laquelle les porteurs d'un deuxième type de conductivité opposé au premier type de conductivité sont prépondérants, ladite couche (114) étant dite couche de blocage.

12. Procédé de fabrication d'un composant de détection (1) de rayonnement électromagnétique selon la revendication 11 dans lequel l'étape de fourniture de la structure de détection (100) comprend une sous étape de formation d'au moins l'une de la première et la deuxième couche de diélectrique de grille (131, 135) dans laquelle ladite couche de diélectrique de grille (131, 135) comprend une première et une deuxième sous-couche (132, 133) de respectivement un premier et un deuxième matériau diélectrique aptes à former un dipôle électrostatique entre eux, les premier et deuxième matériaux étant préférentiellement et respectivement du dioxyde de silicium et de l'alumine.

13. Procédé de fabrication d'un composant de détection (1) de rayonnement électromagnétique selon la revendication 11 ou 12, dans lequel l'étape de fourniture de la structure de détection (100) comprend une sous étape de dopage de la zone de canal de manière à former une portion de la zone de canal, destinée à la formation de la couche de blocage, avec une concentration en éléments dopants supérieures au reste de la zone de canal (113).

14. Procédé de fabrication d'un composant de détection (1) de rayonnement électromagnétique selon la revendication 12 ou 13, dans lequel l'une de l'étape de formation de la structure de détection 100 et de l'étape de connexion de la structure de détection (100) avec le circuit d'alimentation (350), comprend une mise en court-circuit de la zone source (111) et la première électrode de grille (121).

15. Procédé de fabrication d'un composant de détection (1) de rayonnement électromagnétique selon la revendication 14, dans lequel l'une de l'étape de formation de la structure de détection (100) et de l'étape de connexion de la structure de détection (100) avec le circuit d'alimentation (350), comprend une mise en court-circuit de la zone de drain (112) et la deuxième électrode de grille (125).

**Patentansprüche**

1. Komponente zum Detektieren (1) elektromagnetischer Strahlung ($\lambda$), die eine Detektionsstruktur (100) und eine Versorgungsschaltung (350) für die Detektionsstruktur (100) umfasst,

wobei die Detektionsstruktur (100) Folgendes umfasst:

- mindestens ein absorbierendes Element, das dazu konfiguriert ist, die elektromagnetische Strahlung zu absorbieren,
- einen Transistor, der mit dem absorbierenden Element verbunden ist, um einen Temperaturanstieg des absorbierenden Elements während des Absorbierens der elektromagnetischen Strahlung ($\lambda$) zu detektieren, wobei der Transistor Folgendes umfasst:

• mindestens einen ersten Halbleiterbereich (111), als Source-Bereich bezeichnet, und mindestens einen zweiten Halbleiterbereich (112), als Drain-Bereich bezeichnet, jeweils eines ersten Leitfähigkeitstyps,
• mindestens einen dritten Halbleiterbereich (113), als Kanalbereich bezeichnet, der den Source-Bereich (111) und den Drain-Bereich (112) voneinander trennt und eine erste und eine zweite Fläche aufweist, die gegenüberliegende Flächen sind, wobei sich die erste und die zweite Fläche zwischen dem Source-Bereich (111) und dem Drain-Bereich (112) erstrecken,
• eine erste Gate-Elektrode (121), die gegenüber der ersten Fläche des Kanalbereichs (113) angeordnet ist, um den Kanalbereich zu polarisieren, wobei die erste Gate-Elektrode (121) von dem Kanalbereich (113) durch eine erste dielektrische Gate-Schicht (131) getrennt ist,
• eine zweite Gate-Elektrode (125), die gegenüber der zweiten Fläche des Kanalbereichs (113) angeordnet ist, um den Kanalbereich zu polarisieren, wobei die zweite Gate-Elektrode (125) von dem Kanalbereich (113) durch eine zweite dielektrische Gate-Schicht (135) getrennt ist,

wobei die Versorgungsschaltung (350) dazu konfiguriert ist, den Source-Bereich (111), den Drain-Bereich (112) sowie die erste und die zweite Gate-Elektroden (121, 125) der Detektionsstruktur (100) mit Strom zu versorgen, indem sie mit den letzteren verbunden ist, wobei die Detektionskomponente (1) **dadurch**

**gekennzeichnet ist, dass** die Versorgungsschaltung (350) dazu konfiguriert ist, die Detektionsstruktur (100) im Betrieb derart zu versorgen, dass der Kanalbereich (113) auf Höhe einer der ersten oder der zweiten Fläche eine Schicht (114) aufweist, in der die Träger eines dem ersten Leitfähigkeitstyp entgegengesetzten zweiten Leitfähigkeitstyps vorherrschen, wobei die Schicht (114) als Sperrschicht (114 bezeichnet wird.

2. Komponente zum Detektieren (1) elektromagnetischer Strahlung nach Anspruch 1, wobei die zweite dielektrische Gate-Schicht (135) eine Dicke zwischen 10 und 150 nm aufweist, wobei die Dicke der zweiten dielektrischen Gate-Schicht (135) vorzugsweise zwischen 30 und 70 nm beträgt.

3. Komponente zum Detektieren (1) elektromagnetischer Strahlung nach Anspruch 1 oder 2, wobei mindestens eine der ersten und der zweiten dielektrischen Gate-Schicht (131, 135) eine erste und eine zweite Unterschicht aus einem ersten bzw. einem zweiten dielektrischen Material umfasst, die dazu ausgelegt sind, einen elektrostatischen Dipol zwischen sich zu bilden, wobei das erste und das zweite Material vorzugsweise Siliziumdioxid bzw. Aluminiumoxid sind.

4. Komponente zum Detektieren (1) elektromagnetischer Strahlung nach einem der Ansprüche 1 bis 3, wobei der Kanalbereich (113) in einem Abschnitt (116), der dazu bestimmt ist, die Sperrschicht (114) zu bilden, eine Konzentration an Dotierelementen umfasst, die größer ist als im Rest des Kanalbereichs (113).

5. Komponente zum Detektieren (1) elektromagnetischer Strahlung nach Anspruch 3 oder 4, wobei der Source-Bereich (111) und die erste Gate-Elektrode (121) kurzgeschlossen sind.

6. Komponente zum Detektieren (1) elektromagnetischer Strahlung nach Anspruch 5, wobei der Drain-Bereich (112) und die zweite Gate-Elektrode (125) kurzgeschlossen sind.

7. Komponente zum Detektieren elektromagnetischer Strahlung nach Anspruch 5, wobei der Kanalbereich (113) vom ersten Leitfähigkeitstyp ist, wobei die Sperrschicht (114) eine Inversionsschicht ist, und wobei die zweite Gate-Elektrode (125) mit der ersten Gate-Elektrode (121) und mit dem Source-Bereich (111) kurzgeschlossen ist.

8. Komponente zum Detektieren (1) elektromagnetischer Strahlung nach einem der Ansprüche 1 bis 6, wobei der Kanalbereich (113) den zweiten Leitfähigkeitstyp aufweist, wobei die Sperrschicht (114) eine Akkumulationsschicht ist.

9. Komponente zum Detektieren (1) elektromagnetischer Strahlung nach einem der Ansprüche 1 bis 6, wobei der Kanalbereich (113) vom ersten Leitfähigkeitstyp ist, wobei die Sperrschicht (114) eine Inversionsschicht ist.

10. Komponente zum Detektieren (1) elektromagnetischer Strahlung nach einem der Ansprüche 1 bis 9, wobei das absorbierende Element mindestens eines von Folgendem umfasst:

    - mindestens einen Abschnitt der ersten Gate-Elektrode (121),
    - mindestens einen Abschnitt der zweiten Gate-Elektrode (122), und
    - mindestens einen Abschnitt einer Leiterbahn, die die Detektionsstruktur (100) und die Versorgungsschaltung (350) verbindet.

11. Verfahren zum Herstellen einer Komponente zum Detektieren (1) elektromagnetischer Strahlung, das die folgenden Schritte umfasst:

    - Bereitstellen einer Detektionsstruktur (100), wobei die Detektionsstruktur (100) Folgendes umfasst:

      ○ mindestens ein absorbierendes Element, das dazu konfiguriert ist, die elektromagnetische Strahlung zu absorbieren,
      ○ einen Transistor, der mit dem absorbierenden Element verbunden ist, um einen Temperaturanstieg des absorbierenden Elements während des Absorbierens der elektromagnetischen Strahlung zu detektieren, wobei der Transistor Folgendes umfasst:

        • mindestens einen ersten Halbleiterbereich (111), als Source-Bereich bezeichnet, und mindestens einen zweiten Halbleiterbereich (112), als Drain-Bereich bezeichnet, jeweils eines ersten Leitfähigkeitstyps,
        • mindestens einen dritten Halbleiterbereich (113), als Kanalbereich bezeichnet, der den Source-Bereich (111) und den Drain-Bereich (112) voneinander trennt und eine erste und eine zweite Fläche aufweist, die gegenüberliegende Flächen sind und sich zwischen dem Source-Bereich (111) und dem Drain-Bereich (112) erstrecken,
        • eine erste Gate-Elektrode (121), die gegenüber der ersten Fläche des Kanalbereichs (113) angeordnet ist, um den Kanalbereich (113) zu polarisieren,
• eine zweite Gate-Elektrode (125), die gegenüber der zweiten Fläche des Kanalbereichs (113) angeordnet ist, um den Kanalbereich (113) zu polarisieren,

- Bereitstellen einer Versorgungsschaltung (350), die dazu konfiguriert ist, den Source-Bereich (111), den Drain-Bereich (112) sowie die erste und die zweite Gate-Elektroden (121, 125) der Detektionsstruktur (100) jeweils mit Strom zu versorgen,

wobei das Verfahren einen Schritt des Verbindens der Detektionsstruktur (100) mit der Versorgungsschaltung (350) umfasst, wobei der Schritt entweder unabhängig von dem Schritt des Bereitstellens einer Detektionsstruktur (100) und des Bereitstellens der Versorgungsschaltung (350) oder gleichzeitig mit mindestens einem von beiden erfolgt, wobei das Herstellungsverfahren **dadurch gekennzeichnet ist, dass** die Versorgungsschaltung (350) während des Bereitstellens der Versorgungschaltung (350) dazu konfiguriert ist, die Detektionsstruktur (100) im Betrieb derart zu versorgen, dass der Kanalbereich (113) auf Höhe einer der ersten oder der zweiten Fläche eine Schicht (114) aufweist, in der die Träger eines dem ersten Leitfähigkeitstyp entgegengesetzten zweiten Leitfähigkeitstyps vorherrschen, wobei die Schicht (114) als Sperrschicht bezeichnet wird.

**12.** Verfahren zum Herstellen einer Komponenten zum Detektieren (1) elektromagnetischer Strahlung nach Anspruch 11, wobei der Schritt des Bereitstellens der Detektionsstruktur (100) einen Unterschritt des Bildens mindestens einer von der ersten und der zweiten dielektrischen Gate-Schicht (131, 135) umfasst, wobei die dielektrische Gate-Schicht (131, 135) eine erste und eine zweite Unterschicht (132, 133) aus einem ersten bzw. einem zweiten dielektrischen Material umfassen, die dazu ausgelegt sind, einen elektrostatischen Dipol zwischen sich zu bilden, wobei das erste und das zweite Material vorzugsweise Siliziumdioxid bzw. Aluminiumoxid sind.

**13.** Verfahren zum Herstellen einer Komponenten zum Detektieren (1) elektromagnetischer Strahlung nach Anspruch 11 oder 12, wobei der Schritt des Bereitstellens der Detektionsstruktur (100) einen Unterschritt des Dotierens des Kanalbereichs, um einen Abschnitt des Kanalbereichs zu bilden, der zum Bilden der Sperrschicht bestimmt ist, mit einer Konzentration an Dotierelementen umfasst, die größer ist als ein Rest des Kanalbereichs (113).

**14.** Verfahren zum Herstellen einer Komponenten zum Detektieren (1) elektromagnetischer Strahlung nach Anspruch 12 oder 13, wobei einer von dem Schritt des Bildens der Detektionsstruktur 100 und dem Schritt des Verbindens der Detektionsstruktur (100) mit der Versorgungsschaltung (350) das Kurzschließen des Source-Bereichs (111) und der ersten Gate-Elektrode (121) umfasst.

**15.** Verfahren zum Herstellen einer Komponenten zum Detektieren (1) elektromagnetischer Strahlung nach Anspruch 14, wobei einer von dem Schritt des Bildens der Detektionsstruktur (100) und dem Schritt des Verbindens der Detektionsstruktur (100) mit der Versorgungsschaltung (350) das Kurzschließen des Drain-Bereichs (112) und der zweiten Gate-Elektrode (125) umfasst.

**Claims**

**1.** Component (1) for detecting electromagnetic radiation ($\lambda$), comprising a detection structure (100) and a supply circuit (350) of said detection structure (100),

the detection structure (100) comprising:

- at least one absorbent element configured to absorb the electromagnetic radiation,
- a transistor associated with the absorbent element to detect the rise in temperature of said absorbent element when the electromagnetic radiation ($\lambda$) is absorbed, the transistor including:

  ◦ at least one first semiconductor region (111), referred to as the source region, and at least one second region (112), referred to as the drain region, each of a first conductivity type,
  ◦ at least one third semiconductor region (113), referred to as the channel region, separating the source region (111) and the drain region (112) from each other, having a first and a second face opposite to each other, the first and second faces extending between the source region (111) and the drain region (112),
  ◦ a first gate electrode (121) arranged facing the first face of the channel region (113) to bias the channel region, said first gate electrode (121) being separated from the channel region (113) by a first gate dielectric layer (131),
◦ a second gate electrode (125) arranged facing the second face of the channel region (113) to bias the channel region, said second gate electrode (125) being separated from the channel region (113) by a second gate dielectric layer (135),

wherein the supply circuit (350) is configured to electrically supply each of the source region (111), the drain region (112), and the first and second gate electrodes (121, 125) of the detection structure (100) while being connected thereto,
the detection component (1) **being characterised in that** the supply circuit (350) is configured to supply the detection structure (100) in operation so that the channel region (113) has, at at least one from the first and second face, a layer (114) in which the carriers of a second conductivity type opposite to the first conductivity type are preponderant, said layer (114) being referred to as the blocking layer (114).

2. Component (1) for detecting electromagnetic radiation according to claim 1, wherein the second gate dielectric layer (135) has a thickness of between 10 and 150 nm, the thickness of the second gate dielectric layer (135) preferentially being between 30 and 70 nm.

3. Component (1) for detecting electromagnetic radiation according to claim 1 or 2, wherein at least one from the first and second gate dielectric layer (131, 135) comprises a first and a second sublayer of respectively a first and a second dielectric material able to form an electrostatic dipole between them, the first and second materials preferentially and respectively being silicon dioxide and alumina.

4. Component (1) for detecting electromagnetic radiation according to any one of claims 1 to 3, wherein the channel region (113) comprises, in a portion (116) intended to form the blocking layer (114), a concentration of doping elements greater than the rest of the channel region (113).

5. Component (1) for detecting electromagnetic radiation according to claim 3 or 4, wherein the source region (111) and the first gate electrode (121) are short-circuited.

6. Component (1) for detecting electromagnetic radiation according to claim 5, wherein the drain region (112) and the second gate electrode (125) are short-circuited.

7. Component (1) for detecting electromagnetic radiation according to claim 5, wherein the channel region (113) is of the first conductivity type, the blocking layer (114) being an inversion layer, and wherein the second gate electrode (125) is in short-circuit with the first gate electrode (121) and with the source region (111).

8. Component (1) for detecting electromagnetic radiation according to any one of claims 1 to 6, wherein the channel region (113) has the second conductivity type, the blocking layer (114) being an accumulation layer.

9. Component (1) for detecting electromagnetic radiation according to any one of claims 1 to 6, wherein the channel region (113) is of the first conductivity type, the blocking layer (114) being an inversion layer.

10. Component (1) for detecting electromagnetic radiation according to any one of claims 1 to 9, wherein the absorbent element comprises at least one from:

    - at least one portion of the first gate electrode (121),
    - at least one portion of the second gate electrode (122), and
    - at least one conduction-track portion connecting the detection structure (100) and the supply circuit (350).

11. Method for manufacturing a component (1) for detecting electromagnetic radiation, comprising the following steps of:

    - providing a detection structure (100), the detection structure (100) comprising:

      ◦ at least one absorbent element configured to absorb the electromagnetic radiation,
      ◦ a transistor associated with the absorbent element to detect the rise in temperature of said absorbent element when the electromagnetic radiation is absorbed, the transistor including:

        • at least one first semiconductor region (111), referred to as the source region, and at least one second semiconductor region (112), referred to as the drain region, of a first conductivity type,
        • at least one third semiconductor region (113), referred to as the channel region, separating the source region (111) and the drain region (112) from each other, having a first and a second face opposite to each other and extending between the source region (111) and the drain region (112),

• a first gate electrode (121) arranged facing the first face of the channel region (113) to bias the channel region (113),

• a second gate electrode (125) arranged facing the second face of the channel region (113) to bias the channel region (113),

- providing a supply circuit (350) configured to electrically supply each of the source region (111), the drain region (112) and the first and second gate electrodes (121, 125) of the detection structure (100),

the method comprising a step of connecting the detection structure (100) with the supply circuit (350), said step being either independent of the step of providing the detection structure (100) and of providing the supply circuit (350) or concomitant with at least one of them,

the manufacturing method **being characterised in that,** when the supply circuit (350) is provided, the supply circuit (350) is configured to supply the detection structure (100) in operation so that the channel region (113) has, at at least one from the first and second face, a layer (114) in which the carriers of a second conductivity type opposite to the first conductivity type are preponderant, said layer (114) being referred to as the blocking layer.

12. Method for manufacturing a component (1) for detecting electromagnetic radiation according to claim 11, wherein the step of providing the detection structure (100) comprises a substep of forming at least one of the first and second gate dielectric layer (131, 135) wherein said gate dielectric layer (131, 135) comprises a first and a second sublayer (132, 133) of respectively a first and a second dielectric material able to form an electrostatic dipole between them, the first and second materials preferentially and respectively being silicon dioxide and alumina.

13. Method for manufacturing a component (1) for detecting electromagnetic radiation according to claim 11 or 12, wherein the step of providing the detection structure (100) comprises a substep of doping the channel region so as to form a portion of the channel region, intended to form the blocking layer, with a concentration of doping elements greater than the rest of the channel region (113).

14. Method for manufacturing a component (1) for detecting electromagnetic radiation according to claim 12 or 13, wherein one from the step of forming the detection structure (100) and the step of connecting the detection structure (100) with the supply circuit (350) comprises a short-circuiting of the source region (111) and the first gate electrode (121).

15. Method for manufacturing a component (1) for detecting electromagnetic radiation according to claim 14, wherein one from the step of forming the detection structure (100) and the step of connecting the detection structure (100) with the supply circuit (350) comprises a short-circuiting of the drain region (112) and the second gate electrode (125).

100

131,133
0V

121

800mV

134

100mV

111

113

135

112

114

125

-1--12,5V

# FIG. 1A

100

Vg

131,133
Vs

121

134

Vd

111

e⁻

113

135

112

114

125

λ

Vb

-350-

# FIG. 1B

TCC (%/K)

FIG. 1C

FIG. 2

100

0V

131,133    121

134

100mV

111

135

113

112

125

114

500mV-7V

FIG. 3

100

0V

131,133    121

134

200mV-2V

111

135

113

112

125

114

FIG. 4A

100

131,133  121        131,133  121        131,133  121
0V                                                        200mV-2V
                        112              111

111   114 113      114      113  135 125  114 113  112

# FIG. 4B

100

                                              400mV      134
131,133        121
0V                                                    200mV
111

135                                                        113
                                                           112
                                                           131

114                                            FIG. 5A
-1--12,5V

FIG. 5B

FIG. 5 C

100

131,133
0V

121

-1V

134

200mV

111

135

113

112

125

114

150mV-2,5V

FIG. 6

100

0V

131,133

121

134

200mV

111

135

113

112

125

114

150mV-2,5V

FIG. 7

100

0V

131,133  121

134

150mV-2V

111

135

113

112

125

114

# FIG. 8

100

0V

131,133  121

134

200mV

111

135

113

112

125

114

# FIG. 9A

100

0V   131,133   121        131,133   121        131,133   121

112   111                                        200mV

111   114   113        114   113   135   125   114   113   112

# FIG. 9B

FIG. 10

FIG. 11A

FIG. 11B

EP 4 078 116 B1

FIG. 11C

EP 4 078 116 B1

FIG. 11D

EP 4 078 116 B1

FIG. 11E

EP 4 078 116 B1

FIG. 11F

EP 4 078 116 B1

FIG. 11G

EP 4 078 116 B1

FIG. 11H

FIG. 12

FIG. 13A

FIG. 13B

FIG. 14

EP 4 078 116 B1

131
116
115
135
361

# FIG. 15 A

FIG. 15B

FIG. 15C

FIG. 16A

EP 4 078 116 B1

FIG. 16B

FIG. 17

EP 4 078 116 B1

# FIG. 18

EP 4 078 116 B1

FIG. 19A

FIG. 19B

FIG. 20

EP 4 078 116 B1

EP 4 078 116 B1

131
116
115
135
361

**FIG. 21A**

FIG. 21B

FIG. 22

EP 4 078 116 B1

FIG. 23A

EP 4 078 116 B1

FIG. 23B

FIG. 24A

FIG. 24B

FIG. 24C

EP 4 078 116 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 16334109 B

- FR 3056292 A1